# EUROPÄISCHE PATENTSCHRIFT

(11) **EP 2 652 537 B1**
(45) Veröffentlichungstag und Bekanntmachung des Hinweises auf die Patenterteilung: **03.02.2021**
(21) Anmeldenummer: 11799159.6
(22) Anmeldetag: 14.12.2011
(51) Int. Cl.: G02B 21/36, G02B 21/16, G02B 21/18

(54) **AUTOMATISIERTE ABBILDUNG VORBESTIMMTER BEREICHE IN SCHNITTSERIEN**
AUTOMATED DEPICTION OF PREDETERMINED REGIONS IN SERIES OF SECTIONS
IMAGERIE AUTOMATISÉE DE ZONES PRÉDÉTERMINÉES DANS DES SÉRIES DE COUPES

(30) Priorität: 15.12.2010 DE 102010054862; 15.12.2010 DE 102010054863
(43) Veröffentlichungstag der Anmeldung: 23.10.2013
(73) Patentinhaber: Carl Zeiss Microscopy GmbH, 07745 Jena (DE)
(72) Erfinder: THOMAS, Christian, 59494 Soest (DE); EDELMANN, Martin, 73431 Aalen (DE); ALBRECHT, Thomas, 73431 Aalen (DE); WOJEK, Christian, 73431 Aalen (DE)
(74) Vertreter: Carl Zeiss AG - Patentabteilung
(86) Internationale Anmeldenummer: PCT/EP2011/072810
(87) Internationale Veröffentlichungsnummer: WO 2012/080363

(56) Entgegenhaltungen:
- WO-A1-95/23386
- WO-A1-2005/024395
- WO-A1-2006/134444
- WO-A2-01/31566
- DE-T2- 68 905 190
- US-A1- 2007 280 517
- US-A1- 2008 152 207
- US-A1- 2008 152 207
- US-A1- 2010 093 023
- US-A1- 2010 253 774
- JOHN M ROBINSON ET AL: "Correlative Fluorescence and Electron Microscopy on Ultrathin Cryosections: Bridging the Resolution Gap", JOURNAL OF HISTOCHEMISTRY AND CYTOCHEMISTRY, HISTOCHEMICAL SOCIETY, NEW YORK, NY, US, Bd. 49, Nr. 7, 1. Januar 2001 (2001-01-01) , Seiten 803-808, XP007914666, ISSN: 0022-1554

## Beschreibung

Die vorliegende Erfindung betrifft ein Verfahren zur vergrößerten Abbildung von Proben, eine Vorrichtung zur vergrößerten Abbildung von Proben, und ein Computerprogrammprodukt für eine Vorrichtung, die eine Probe vergrößert abbildet. Insbesondere betrifft die vorliegende Erfindung derartige Vorrichtungen und Verfahren, bei denen in einer mehrere Schritte umfassenden Prozedur ausgewählte Bereiche innerhalb von Serienschnitten vergrößert abgebildet werden.

Insbesondere für biologische Proben ist eine möglichst hoch aufgelöste Abbildung einzelner interessierender Bereiche in einer Serie von Schnitten wünschenswert. Insbesondere dreidimensionale Informationen über bestimmte interessierende Regionen innerhalb eines Probenvolumens werden häufig auf diese Weise gewonnen.

Eine Probe wird dazu üblicherweise in eine Vielzahl, oftmals in bis zu einige 100, dünner Schnitte geschnitten. Die Schnitte werden auf geeigneten Probenträgern angeordnet und zunächst insbesondere licht- oder elektronenmikroskopisch betrachtet und nach interessierenden Bereichen abgesucht. Ein detektierter interessierender ausgewählter Bereich wird anschließend in das Zentrum des Sehfeldes gelenkt und danach in hoher Vergrößerung angefahren und abgebildet. Manuell werden nun höchst aufwendig korrespondierende Bereiche auf den benachbarten Schnitten (Nachbarbereiche) aufgesucht und anschließend ebenfalls bei hoher Vergrößerung abgelichtet ("conventional approach" in Vicidomini et al., High Data Output and Automated 3D Correlative Light-Electron Microscopy Method, Traffic 2008; 9: 1828-1838). Die Ergebnisse dieses aufwendigen Prozesses sind sehr oft äußerst unbefriedigend, und nur mit viel Erfahrung und Geschicklichkeit sind überhaupt verwertbare Ergebnisse zu erzielen. Bei optischen Mikroskopen besteht das grundsätzliche Problem, dass lichtempfindliche Präparationen in der zum Wiederauffinden korrespondierender Bereiche benötigten Zeit sehr häufig bereits irreversible Schädigungen erfahren und beispielsweise ausbleichen, bevor die einzelnen interessierenden Bereiche und deren Nachbarbereiche in der gewünschten Qualität bildlich erfasst sind. Im Teilchenstrahlmikroskop treten vergleichbare Probleme auf. Beispielsweise wird eine Probe im Elektronenmikroskop durch einen ausdauernden Beschuss mit Elektronen unter Umständen stark geschädigt und kontaminiert. Insbesondere im Rasterelektronenmikroskop sollte die Verweildauer an einzelnen Probenbereichen möglichst kurz gehalten werden, da anderenfalls die Gefahr besteht, dass sich die Probe lokal auflädt, was zufriedenstellende Abbildungsqualitäten verhindert.

Vielfältige Anstrengungen sind unternommen worden, den Abbildungsprozess zu optimieren. Beispielsweise beschreibt die US2008/0152207 A1 ein Verfahren, wonach die Schnitte einer Probe aufgesucht und in Übersichtsbildern über eine Bildaufnahmeeinrichtung erfasst werden. Die Suche nach interessierenden Bereichen erfolgt dann nicht am Präparat, sondern im Nachhinein an dessen Abbild. Nachteilig an der Methode ist, dass die einzelnen interessierenden Bereiche in ihrer lateralen Auflösung auf die Auflösung, mit der die Übersichtsbilder der einzelnen Schnitte erstellt wurden, beschränkt sind. In Vicidomini *et al* (Vicidomini et al., High Data Output and Automated 3D Correlative Light-Electron Microscopy Method, Traffic 2008; 9: 1828-1838) wird eine Methode beschrieben, die dieses Problem adressiert. Danach wird die Probe ebenfalls zunächst dünnöster Einzelbilder bildlich erfasst und die Einzelbilder anschließend zu einem höher aufgelösten Mosaikbild zusammengefügt. In diesem Mosaikbild werden anschließend in einem manuellen Prozess die interessiereestgelegten Bereichen entsprechenden Bildinformationen werden aus dem Mosaikbild extrahiert und der Bildstapel dann zu einem dreidimensionalen Volumen, also einem Bild-Datenvolumen, rekonstruiert. Mit diesem Ansatz wird zwar eine erhöhte laterale Auflösung erreicht; jedoch bleibt die manuelle Suche innerhalb der einzelnen Schnitte nach korrespondierenden Bereichen bei bis zu mehreren 100 Schnitten je Probe extrem aufwendig. Aufgrund der hohen Aufnahmezeiten dauert dieses Verfahren außerdem sehr lange und generiert riesige Datenmengen.

Ausgehend hiervon ist es die Aufgabe der vorliegenden Erfindung, Lösungen anzugeben, nach denen interessierende Bereiche in einer Serie von Schnitten unter Vermeidung der geschilderten Nachteile in hoher Auflösung abbildbar sind.

Erfindungsgemäß wird diese Aufgabe gelöst durch ein Verfahren zur vergrößerten Abbildung von Proben nach Anspruch 1, eine Vorrichtung zur vergrößerten Abbildung von Proben nach Anspruch 9, sowie ein Computerprogrammprodukt nach Anspruch 16, das wenigstens eine Vorrichtung der vorgenannten Art zur Ausführung des vorgenannten Verfahrens veranlasst.

Ein Verfahren zur vergrößerten Abbildung von Proben nach einem Aspekt der Erfindung umfasst eine Prozedur, bei der in einer Mehrzahl von Schritten wenigstens zwei zueinander benachbarte Schnitte einer Probe, die auf wenigstens einem Probenträger vorliegen, mit einer Vorrichtung zur vergrößerten Abbildung von Proben vergrößert abgebildet werden. Der Probenträger ist dabei über eine Probenträgeraufnahme mit der Vorrichtung verbunden und die Lage der bei der Abbildung der Schnitte abgebildeten Probenträgerbereiche in Bezug auf die Vorrichtung sowie die verwendete Vergrößerungsstufe werden ermittelt. Mittels wenigstens eines ausgewählten, in der Bildinformation der vergrößert abgebildeten Schnitte enthaltenen Merkmals, insbesondere mittels wenigstens einer geeigneten Kontur und/oder Struktur, werden für die wenigstens zwei vergrößert abgebildeten Schnitte lokale, für den jeweiligen Schnitt spezifische Koordinatensysteme definiert. Wenigstens ein interessierender Bereich innerhalb wenigstens eines der vergrößert abgebildeten Schnitte wird ausgewählt (Auswahlbereich) und die Relativlage des Auswahlbereichs bezogen auf das für den jeweiligen Schnitt definierte lokale Koordinatensystem sowie die Lage des Auswahlbereichs Bezug auf die Vorrichtung werden ermittelt. Anschließend erfolgt die Übertragung der Relativlage dieses Auswahlbereichs in das lokale Koordinatensystem des wenigstens einen weiteren vergrößert abgebildeten Schnittes, womit dort wenigstens ein korrespondierender Nachbarbereich festgelegt wird, dessen Lage in Bezug auf die Vorrichtung ermittelbar ist. Auswahlbereich und/oder Nachbarbereich können auf diese Weise vorzugsweise bei hoher Vergrößerung automatisiert angefahren und vergrößert abgebildet werden.

Durch die Definition lokaler schnittspezifischer Koordinatensysteme wird die automatisierte Übertragung eines interessierenden Bereiches auf weitere Schnitte der gleichen Probe sehr einfach ermöglicht. Das sehr aufwendige manuelle Auffinden und Aufsuchen der zu einem interessierenden Bereich benachbart gelegenen Bereiche auf weitere Schnitten der Probe wird mit dem vorgeschlagenen Verfahren überflüssig.

Durch die Ermittelung der Lagen von Auswahlbereich und/oder Nachbarbereich in Bezug auf die Vorrichtung wird die automatisierte Abbildung dieser Bereiche insbesondere bei hoher Vergrößerung, und damit maximierter lateraler Auflösung, ermöglicht. Das erfindungsgemäße Verfahren verkürzt wesentlich die Zeitdauer, in der die zu untersuchenden Schnitte einer abbildenden Strahlung ausgesetzt werden müssen, was zu verminderten Schädigungen und besseren Abbildungsergebnissen führt.

Das vorgeschlagene Verfahren ist für eine Vielzahl von Proben geeignet. Insbesondere ist es geeignet für biologische Proben. Beispielsweise können vollständige Organismen oder Teile davon untersucht werden, insbesondere Zellen oder Teile von Zellen, Gewebe oder Gewebeverbände. Es kann sich dabei um lebendes oder um totes Material handeln. Die Probe kann fixiert vorliegen. Die Fixierung kann beispielsweise durch schnelles Einfrieren oder chemisch, beispielsweise mit Paraformaldehyd oder Glutaraldehyd, erfolgen oder auch durch eine Kombination der beiden Methoden. Aber auch alle anderen denkbaren Fixierungsmethoden sind möglich. In anderen Anwendungen kann die Probe markiert, insbesondere fluoreszenzmarkiert oder anderweitig angefärbt sein. Auch spezifische biologische Markierungen, beispielsweise bestimmter Strukturen auf der Probenoberfläche oder im Probenvolumen sind möglich Die Markierung kann die Probenoberfläche betreffen oder das überwiegende oder vollständige Probenvolumen. Die Probe kann eingebettet vorliegen. Die Einbettung kann mit einem Kunstharz, insbesondere mit einem Acrylharz, oder auch mit Paraffin erfolgt sein. Allerdings ist jede andere Einbettungsart ebenso gut möglich. Die Probe kann vorkontrastiert sein, insbesondere für elektronenmikroskopische Untersuchungen.

Nach einem Aspekt des Verfahrens ist es auch möglich, wenigstens eine künstliche Struktur in die ungeschnittene Probe einzubringen, denkbar sind hier eine Vollstruktur oder eine Hohlstruktur wie beispielsweise wenigstens eine Bohrung. Insbesondere Hohlstrukturen wie beispielsweise Bohrungen haben den Vorteil, das sie mit den verschiedenen vergrößert abbildenden Vorrichtungen in der Regel gut kontrastierbar sind. Die Struktur ist vorzugsweise so ausgebildet, dass sie ein globales, für das Probenvolumen insgesamt oder überwiegend gültiges dreidimensionales Koordinatensystem definiert. Wird eine solche Struktur mitgeschnitten, bleibt sie als künstliches zweidimensionales Muster auf den Schnitten sichtbar und detektierbar. Nach einer bevorzugten Variante des Verfahrens wird das zweidimensionale Muster als Merkmal für die Definition lokaler Koordinatensysteme ausgewählt. Nach einer weiteren bevorzugten Variante des Verfahrens werden die Schnitte durch Vergleich der jeweilig charakteristischen zweidimensionalen Muster der mitgeschnittenen Struktur(en) axial ihren ursprünglichen Schnittebenen zugeordnet. Vorzugsweise erfolgt eine solche Zuordnung oder Sortierung rechnerisch, beispielsweise über die Minimierung der Merkmalsunterschiede, insbesondere durch Kreuzkorrelation.

Im Umfeld der rechnergestützten Sortierung können manuelle Korrekturmöglichkeiten vorgesehen sein. Nach einer Anwendung kann vor dem Sortierungsschritt eine Auswahlmöglichkeit vorgesehen sein, die es dem Benutzer ermöglicht, einzelne Schnitte, die sortiert werden sollen und/oder von der Sortierung ausgenommen werden sollen, auszuwählen und/oder abzuwählen. Nach einer weiteren Anwendung werden abgebildete Schnitte, die rechnerisch nicht oder nur unsicher in die Sortierfolge der abgebildeten Schnitte einsortiert werden konnten, markiert und dem Benutzer als nicht oder unsicher einsortiert ausgegeben. Der Nutzer erhält die Möglichkeit, den Schnitt manuell einzusortieren oder zu verwerfen. Weiterhin kann vorgesehen sein, dass der Benutzer wenigstens eine interessante Teilmenge der sortierten abgebildeten Schnitte auswählt und die anderen abgebildeten Schnitte verworfen werden.

Bevorzugt werden wenigstens drei Bohrungen, zum Beispiel Laserbohrungen, in das Probenvolumen eingebracht. Nach einer Variante können die drei Bohrungen in zueinander vorbestimmten Winkeln jeweils schräg zur Schnittebene in die ungeschnittene Probe eingebracht werden, so dass die Bohrungen ein globales, für das Probenvolumen insgesamt oder überwiegend gültiges, dreidimensionales Koordinatensystem definieren. Besonders bevorzugt werden die drei Bohrungen etwa tetraedrisch angeordnet und zwar so, dass die Bohrungen auf einer Probenseite nahe den äußeren Probenrändern in die Probe treten und auf der Gegenseite so aus der Probe treten, dass die verlängerten Bohrungsachsen deutlich außerhalb des Probenvolumens aufeinander treffen. Die Bohrungen bilden somit in jeder Schnittebene der Probe ein eindeutiges zweidimensionales Muster, das von Ebene zu Ebene seine Dimension verändert. Ein solches Muster ist ideal geeignet, um die Schnitte einer Probe zu sortieren. Bevorzugt wird die Mustererkennung rechnerisch mittels herkömmlicher Algorithmen vollzogen und beispielsweise über die Minimierung der Musterunterschiede werden die Schnitte einer Probe ihren ursprünglichen Schnittebenen zugeordnet und damit sortiert.

Nach einer weiteren bevorzugten Variante wird das zweidimensionale Muster einer in die ungeschnittene Probe eingebrachten Struktur, das bei Betrachtung der Schnittflächen einer geschnittenen Probe zu sehen ist, zusätzlich zur Berechnung von Verschiebungen oder Verzerrungen der Schnitte genutzt. Die Abweichung des zweidimensionalen Musters auf einem Schnitt von seiner ursprünglichen Form, wie es bei Einbringung der wenigstens einen Struktur in die Probe vorlag, wird ermittelt und auf den abgebildeten Schnitt oder auf Bereiche des Schnittes extrapoliert und der Schnitt entzerrt. Verschiebungen oder Verzerrungen können beim Schneiden der Probe und/oder beim Transfer der Schnitte auf den Probenträger entstehen und erschweren die Registrierung der Schnitte zu einem Bildstapel unter Umständen beträchtlich. Bevorzugt werden, wie erwähnt, drei Bohrungen eines vorbestimmten Querschnittes gewählt, und in zueinander vorbestimmten Winkeln in die Probe eingebracht. Jeder Schnittebene ist damit ein bestimmtes berechenbares zweidimensionales Muster der drei Bohrungen zugeordnet. Die durch Vergleich des zweidimensionalen Musters, wie es auf einem bestimmten Schnitt vorliegt, mit dem berechneten Muster erkannten Verschiebungen und/oder Deformationen in der Anordnung der drei Bohrungen zueinander und/oder in deren Querschnitten werden, beispielsweise während der Registrierung mehrerer Schnitte zu einem Bildstapel, auf den Schnitt oder auf Bereiche des Schnittes extrapoliert und der Schnitt damit rechnerisch entzerrt. Die rechnerische Entzerrung der Bilddaten einzelner Schnitte erfolgt vorzugsweise mit bekannten Algorithmen.

Nach einen weiteren Aspekt des Verfahrens liefert das mit Einbringung der Struktur bevorzugt festgelegte globale dreidimensionale Koordinatensystem neben der Information über die Schnittebene eines Schnittes auch eine Information über den Abstand zweier Schnittebenen. Die Struktur ist so ausgeführt, dass signifikante Musterunterschiede der zweidimensionalen Muster dieser Struktur für voneinander weniger als 1000 nm beabstandete Schnittebenen von verschiedenen Mikroskopsystemen, insbesondere von optischen Mikroskopiesystemen und von teilchenstrahlungsmikroskopischen Systemen detektierbar sind. Bevorzugt sind Musterunterschiede für voneinander weniger als 200 nm, besonders bevorzugt für weniger als 100 nm beabstandete Schnittebenen detektierbar. Bevorzugt werden Bohrungen in die Probe eingebracht, die ausreichend dünn gewählt werden und die in einem Winkel zueinander in die Probe eingebracht werden, dass die genannten bevorzugten Varianten ausführbar erfüllt sind. Beispielsweise werden Bohrungen mit einem Durchmesser zwischen 0,2 µm und 5 µm verwendet, die vorzugsweise in einem Winkel größer 20°, besonders bevorzugt 30° zueinander eingebracht werden. Bei der Abbildung des zweidimensionalen Musters zweier Schnitte einer Probe gemessene Dimensionsunterschiede der Muster werden umgerechnet in den Abstand, den die Schnittebenen beider Schnitte zueinander aufweisen. Dieser Schnittebenenabstand variiert in Abhängigkeit der konkreten Schnittdicken. Bei der dreidimensionalen Rekonstruktion der abgebildeten Schnitte kann der Schnittebenenabstand mit in die Berechnung einfließen und ermöglicht somit eine deutlich genauere Rekonstruktion als sie mit einem für alle Schnitte gleich angenommenen fiktiven Schnittebenenabstand möglich ist. Lokale Stauchungen oder Dehnungen des dreidimensionalen Rekonstrukts, die zwangsläufig entstehen, wenn ein fiktiver Schnittebenenabstand als Berechnungsgrundlage dient, werden so vermieden.

In einer weiteren Ausgestaltung des Verfahrens werden insbesondere bei der teilchenstrahlenmikroskopischen Abbildung der Schnitte die Bohrlochdurchmesser wenigstens einer schräg zur Schnittebene durch die Probe verlaufenden Bohrung vermessen. Da die Bohrung auch schräg durch die Schnitte verläuft, unterscheiden sich die Bohrlöcher in der Durchsicht, wie sie von der abbildenden Vorrichtung erfasst werden, in ihrem Durchmesser in Abhängigkeit der konkreten Schnittdicken der Schnitte. Der gemessene Durchmesser und der Winkel, unter dem die Bohrung eingebracht wurde, werden herangezogen, um die Schnittdicke des abgebildeten Schnittes zu berechnen. Die ermittelten Schnittdicken mehrerer Schnitte einer Schnittserie ermöglichen eine nochmals gesteigerte Genauigkeit bei der dreidimensionalen Rekonstruktion gegenüber einem für alle Schnitte gleich angenommenen fiktiven Schnittebenenabstand.

Weitere Gegenstände der vorliegenden Erfindung sind unter den nachfolgenden Ziffern (1) bis (18) dargestellt, wobei die Gegenstände untereinander und jeder dieser Gegenstände mit den oben angegebenen Gegenständen kombiniert werden können.
(1) Verfahren zur vergrößerten Abbildung von Proben, wobei
   a) wenigstens eine künstliche Struktur in ein Probenvolumen eingebracht wird, wobei die Struktur ein globales für das Probenvolumen zumindest überwiegend gültiges Koordinatensystem definiert,
   b) die Probe oder ein Teil der Probe in eine Mehrzahl dünner Schnitte geschnitten wird, wobei die künstliche Struktur in der Mehrzahl der Schnitte als zweidimensionales Muster detektierbar ist, und
   c) wenigstens einer der Schnitte auf einem Probenträger vorliegt und mit einer Vorrichtung zur vergrößerten Abbildung von Proben vergrößert abgebildet wird, wobei das zweidimensionale Muster der wenigstens einen künstlich in die Probe eingebrachten Struktur ausgewertet wird, und durch den Abgleich der ermittelten Werte mit dem globalen Koordinatensystem auf die ursprüngliche Position des wenigstens einen vergrößert abgebildeten Schnittes in der Probe rückgeschlossen werden kann.
(2) Verfahren nach Ziffer (1), dadurch gekennzeichnet, dass wenigstens drei Schnitte der Probe vergrößert abgebildet und die Abbilder nach den ursprünglichen Positionen der abgebildeten Schnitte in der Probe sortiert werden, wobei die Sortierung über die Minimierung der Musterunterschiede erfolgt.
(3) Verfahren Ziffer (1) oder (2), dadurch gekennzeichnet, dass die wenigstens eine künstlich in die Probe eingebrachte Struktur durch wenigstens eine Hohlstruktur gebildet wird.
(4) Verfahren nach Ziffer (3), dadurch gekennzeichnet, dass die Hohlstruktur durch wenigstens drei Bohrungen gebildet wird, die in zueinander eingestellten Winkeln in die Probe eingebracht werden und dass diese Bohrungen zumindest für einen Teil der Schnitte der Probe jeweils lokale Koordinatensysteme definieren.
(5) Verfahren nach Ziffer (4), dadurch gekennzeichnet, dass die Bohrungen auf einer Probenseite nahe den äußeren Probenrändern in die Probe treten und auf der Gegenseite so aus der Probe treten, dass die verlängerten Bohrungsachsen deutlich außerhalb des Probenvolumens aufeinander treffen, wobei die Bohrungen in jeder Schnittebene der Probe ein eindeutiges zweidimensionales Muster bilden, das von Ebene zu Ebene seine Dimension verändert.
(6) Verfahren nach ein Ziffer (4) oder (5), dadurch gekennzeichnet, dass die Bohrung(en) mittels eines Lasers in die Probe eingebracht werden.
(7) Verfahren nach einer der vorhergehenden Ziffern, dadurch gekennzeichnet, dass wenigstens zwei Schnitte einer Probe vergrößert abgebildet werden, wobei der Probenträger über eine Probenträgeraufnahme mit der Vorrichtung verbunden ist, und wobei die Lage der abgebildeten Probenträgerbereiche in Bezug auf die Vorrichtung sowie die verwendete Vergrößerungsstufe erfasst wird, dass wenigstens ein Bereich innerhalb wenigstens eines der vergrößert abgebildeten Schnitte ausgewählt wird (Auswahlbereich) und die Relativlage dieses wenigstens einen Auswahlbereichs bezogen auf das für den jeweiligen Schnitt definierte lokale Koordinatensystem sowie dessen Lage in Bezug auf die Vorrichtung ermittelt werden, dass die Relativlage dieses wenigstens einen Auswahlbereichs in das lokale Koordinatensystem des wenigstens einen weiteren vergrößert abgebildeten Schnittes übertragen wird, um wenigstens einen korrespondierenden Nachbarbereich auf diesem Schnitt festzulegen, dass die Lage des Nachbarbereichs in Bezug auf die Vorrichtung ermittelt wird, und dass der wenigstens eine vorher festgelegte Auswahlbereich und/oder der wenigstens eine korrespondierende Nachbarbereich vorzugsweise bei hoher Vergrößerung von der Vorrichtung angefahren und vergrößert abgebildet wird/werden.
(8) Verfahren nach Ziffer (7), dadurch gekennzeichnet, dass der wenigstens eine vergrößert abgebildete Auswahlbereich mit seinem/n jeweiligen Nachbarbereich(en) wenigstens eine Bildserie bildet, die ganz oder teilweise zu einem dreidimensionalen Volumen zusammengesetzt wird.
(9) Verfahren nach Ziffer (7) oder (8), dadurch gekennzeichnet, dass ein Probenträger verwendet wird, auf dem wenigstens eine Justiermarkierung angebracht ist, dass ein globales, individuell für den Probenträger gültiges Bezugssystem ermittelt wird, indem die Justiermarkierung vergrößert abgebildet und die Lage der Justiermarkierung in Bezug auf die Vorrichtung gespeichert wird, und dass die Relativlage von Auswahl- und/oder Nachbarbereich(en) bezogen auf die Justiermarkierung gespeichert werden.
(10) Verfahren nach Ziffer (9), dadurch gekennzeichnet, dass bei der Abbildung der Schnitte, der Auswahlbereich(e) und/oder Nachbarbereich(e) erfasste Daten, insbesondere lokale und/oder globale Lagedaten, vollständig oder teilweise an wenigstens eine weitere Vorrichtung zur vergrößerten Abbildung von Proben übermittelt werden, dass der wenigstens eine Probenträger mit der wenigstens einen weiteren Vorrichtung zur vergrößerten Abbildung von Proben verbunden und wenigstens einer der zuvor abgebildeten Auswahl- und/oder Nachbarbereich(e) von der wenigstens einen weiteren Vorrichtung zur vergrößerten Betrachtung von Proben angefahren und vergrößert abgebildet wird.
(11) Verfahren nach Ziffer (10), dadurch gekennzeichnet, dass der wenigstens eine mit der wenigstens einen weiteren Vorrichtung zur vergrößerten Abbildung von Proben vergrößert abgebildete Auswahlbereich und/oder seine jeweiligen Nachbarbereich(e) wenigstens eine Bildserie bildet, die ganz oder teilweise zu einem dreidimensionalen Volumen zusammengesetzt wird.
(12) Verfahren nach Ziffer (10) oder (11), dadurch gekennzeichnet, dass die in den unterschiedlichen Vorrichtungen zur vergrößerten Abbildung von Proben jeweilig vergrößert abgebildeten Auswahl- und/oder Nachbarbereiche(e) paarweise miteinander korreliert und rechnerisch korrelierte Bilddaten erzeugt werden.
(13) Verfahren nach einer der Ziffern 10-12, dadurch gekennzeichnet, dass wenigstens ein Teilbereich innerhalb wenigstens eines zuvor mit der ersten oder mit der weiteren Vorrichtung zur vergrößerten Abbildung von Proben abgebildeten Auswahl- oder Nachbarbereichs ausgewählt wird, dass dessen Relativlage bezogen auf das jeweilig definierte lokale Koordinatensystem in Bezug auf die Justiermarkierung ermittelt werden, dass die Relativlage in das lokale Koordinatensystem wenigstens eines weiteren vergrößert abgebildeten Schnittes übertragen wird, um wenigstens einen korrespondierenden Nachbarteilbereich auf diesem Schnitt festzulegen, dass die Lage des Nachbarteilbereichs in Bezug auf die Justiermarkierung ermittelt wird, dass der Teilbereich und der korrespondierende Nachbarteilbereich von der weiteren Vorrichtung angefahren und, vorzugsweise bei hoher Auflösung, vergrößert abgebildet werden, und dass der Teilbereich mit seinem/n Nachbarteilbereich(en) wenigstens eine Bildserie bildet, die ganz oder teilweise zu einem dreidimensionalen Volumen zusammengesetzt wird.
(14) Verfahren nach einer der vorhergehenden Ziffern, dadurch gekennzeichnet, dass das zweidimensionale Muster der künstlichen Struktur, wie es auf einem bestimmten Schnitt vorliegt, mit dem berechneten Muster der Ebene aus der der Schnitt stammt verglichen, und die erkannten Verschiebungen und/oder Deformationen in der Anordnung der Struktur auf den Schnitt oder auf Bereiche des Schnittes extrapoliert und der Schnitt damit entzerrt wird.
(15) Verfahren nach einer der vorhergehenden Ziffern, dadurch gekennzeichnet, dass Musterunterschiede der zweidimensionalen Muster der künstlichen Struktur für voneinander weniger als 1000 nm, bevorzugt für voneinander weniger als 200 nm, besonders bevorzugt für weniger als 100 nm beabstandete Schnittebenen von einer Vorrichtung zur vergrößerten Abbildung von Proben detektierbar sind.

Das erfindungsgemäße Verfahren verlangt, dass eine unbehandelte oder eine, wie weiter oben bereits beispielhaft geschildert, behandelte Probe in wenigstens zwei Schnitten auf wenigstens einem Probenträger vorliegt. Es soll jedoch erwähnt werden, dass mit dem vorgeschlagenen Verfahren unbegrenzt viele Schnitte verarbeitet werden können.

Die Anzahl der Schnitte pro Probe ist allein durch die Größe der Probe und die minimal erreichbare Schnittdicke limitiert. Die bevorzugte Dicke der Schnitte hängt allgemein ab von der gewählten Abbildungsart. Im Allgemeinen werden dünne Schnitte bevorzugt. Besonders bevorzugt liegt die Dicke der Schnitte innerhalb eines Bereiches zwischen 10 und 1000 nm. Bevorzugt werden die einzelnen Schnitte durch mehr oder weniger paralleles Zerschneiden der Probe in dünne Scheibchen gewonnen. Wenn vorliegend von Schnitten die Rede ist, sind solche dünnen Scheibchen gemeint. Die Schnitte können von Hand, beispielsweise mit einem Skalpell oder einer Klinge, oder mit einem Mikrotom, beispielsweise mit einem Schlitten- oder Rotationsmikrotom, einem Vibratom oder einem Laser-Mikrotom gewonnen werden. Alle Arten von Mikrotomen oder Ultramikrotomen sind denkbar. Nach einer bevorzugten Ausgestaltung des Verfahrens wird eine Serie von Schnitten angefertigt und die Schnitte der Serie werden in der Reihenfolge ihres Schnittes fortlaufend auf einem oder mehreren Probenträgern angeordnet.

Das erfindungsgemäße Verfahren ermöglicht die Verwendung aller Arten von Probenträgern. Der verwendete Probenträger wird jedoch bevorzugt angepasst an das jeweilig verwendete Abbildungsverfahren gewählt. Werden die Schnitte beispielsweise mit einem Lichtmikroskop abgebildet, können die Schnitte nach einer Anwendung auf einem herkömmlichen Objektträger angeordnet werden. Nach einer anderen Anwendung kann ein Deckglas als Probenträger benutzt werden. Werden die Schnitte beispielsweise mit einem Teilchenstrahlmikroskop abgebildet, muss ein für die Teilchenstrahlmikroskopie geeigneter Probenträger gewählt werden. Die Eignung für die Teilchenstrahlmikroskopie bedingt, dass der Probenträger elektrisch leitfähig und vorzugsweise nicht oder nur in tolerierbaren, vorbestimmten Grenzen magnetisierbar ist. Beispielsweise kann für die teilchenstrahlmikroskopische Abbildung ein in der Transmissionselektronenmikroskopie häufig verwendetes sogenanntes Probennetzchen (grid) benutzt werden. Ebenso geeignet ist ein elektrisch leitfähig und transparent beschichtetes Deckglas, oder ein Wafer.

Die auf dem oder den Probenträger(n) angeordneten Schnitte können ohne weitere Behandlung abgebildet werden. Bevorzugt werden die Schnitte vor ihrer Abbildung weiteren Behandlungen unterzogen. In einigen Anwendungen werden die Schnitte nach ihrer Anordnung auf dem Probenträger beispielsweise angefärbt oder kontrastiert. Die Färbung kann mehrere Färbeschritte, beispielsweise Färbung und Gegenfärbung, umfassen. Die Kontrastierung erfolgt entweder so, dass Zielstrukturen kontrastiert werden (positive staining) oder so, dass die Umgebung der Zielstrukturen kontrastiert wird (negative staining). In anderen Anwendungen werden spezifische Strukturen innerhalb der Schnitte, beispielsweise auf subzellulärer Ebene, markiert. Die Markierung kann verschiedene Substrate, beispielsweise DNA, RNA, Peptide, Proteine, Proteinkomplexe, Lipide oder sogenannte small molecules betreffen. Die Markierung kann zum Beispiel mit unterschiedlichen Fluoreszenzfarbstoffen, Nanopartikeln oder enzymatisch aktiven Proteinen oder Proteinkomplexen erfolgen. Die Markierung kann konjugiert, zum Beispiel antikörpervermittelt, durch Hybridisierung oder durch direkte Bindung des Markierungsstoffes an das Substrat erfolgen. In nacheinander geschalteten Markierungsreaktionen können verschiedene Strukturen mit verschiedenen Markierungen sichtbar gemacht werden. In einer speziellen Anwendung ist es auch möglich, die markierten Schnitte nach dem vorgeschlagenen Verfahren abzubilden, danach die Markierung von den Schnitten zu eluieren, um anschließend in einer erneuten Markierungsreaktion weitere Strukturen zu markieren und die Schnitte erneut abzubilden. In einer weiteren speziellen Anwendung ist es auch möglich, die Schnitte zunächst unbehandelt abzubilden, nachfolgend zu behandeln und sie anschließend erneut abzubilden.

Wesentlich für das vorgeschlagene Verfahren ist die Verbindung des wenigstens einen verwendeten Probenträgers in der Vorrichtung. Die Verbindung kann mit allen denkbaren bekannten Mitteln erfolgen, beispielsweise durch Klemmung oder durch Verschraubung. Vorzugsweise erfolgt die Verbindung so, dass der Probenträger ortsfest in der Vorrichtung fixiert vorliegt.

Die wenigstens zwei auf dem wenigstens einem Probenträger vorliegenden Schnitte werden bevorzugt manuell angefahren und vergrößert abgebildet. Es ist aber ebenso gut möglich, diesen Abbildungsprozess automatisch zu gestalten. Dies kann beispielsweise durch die automatisierte Aufnahme teilweise überlappender Einzelbilder, die bevorzugt alle mit derselben Vergrößerung erstellt werden, erfolgen, wobei die Lage und Auflösung wenigstens eines Einzelbildes in Bezug auf die Vorrichtung erfasst werden muss. Die Einzelbilder können anschließend zu einem Mosaikbild zusammengesetzt werden, das die auf dem Probenträger vorliegenden Schnitte vollständig oder teilweise abbildet.

Die Abbildung der Schnitte erfolgt bevorzugt mit dem gleichen mikroskopischen Kontrast wie die spätere Abbildung der Auswahl- und/oder Nachbarbereiche. Es ist jedoch ebenso gut denkbar, dass die Abbildung der Schnitte mit einem abweichenden Kontrast erfolgt. Nach einer bevorzugten Ausgestaltung des Verfahrens verwendet die abbildende Vorrichtung sichtbares Licht zur Abbildung. Nach einigen Anwendungen werden die Schnitte beispielsweise im Phasen- oder Dunkelfeldkontrast abgebildet, wohingegen die spätere Abbildung der Auswahl- und/oder Nachbarbereiche beispielsweise mittels Fluoreszenzanregung erfolgt.

Es kann jedes denkbare Merkmal auf den abgebildeten Schnitten ausgewählt werden, um die schnittspezifischen lokalen Koordinatensysteme zu definieren. Es muss jedoch für die Definition lokaler Koordinatensysteme geeignet sein. Die Eignung bedingt, dass ein ausgewähltes Merkmal sich über die abgebildeten Schnitte erstreckt und dass das ausgewählte Merkmal in relativer Konstanz auf den abgebildeten Schnitten ausgeprägt ist. Bevorzugt weist das ausgewählte Merkmal eine relative Konstanz weitgehend durch das Probenvolumen hindurch auf. Damit ist sichergestellt, dass sich die lokalen Koordinatensysteme von Schnitt zu Schnitt nur unwesentlich unterscheiden, was die Berechnung von Nachbarbereichen auf weiteren Schnitten der gleichen Probe vereinfacht. Auch die kombinierte Auswahl verschiedenartiger Merkmale ist möglich. Die Auswahl erfolgt bevorzugt automatisiert durch die Vorrichtung.

Insbesondere kann es sich bei dem ausgewählten Merkmal um wenigstens eine Kontur und/oder Struktur handeln. Das Verfahren kann beispielsweise dahingehend ausgebildet sein, dass Umrissstrukturen der abgebildeten Schnitte ausgewählt werden, um die lokalen Koordinatensysteme zu definieren. Bevorzugt wird für diesen Fall die ungeschnittene Probe zumindest teilweise angefärbt oder anderweitig kontrastiert, um eine bessere Kontrastierung der Schnittumrisse in der Abbildung zu erreichen. Nach einem Aspekt des Verfahrens wird die ungeschnittene Probe zumindest teilweise mit einem Fluoreszenzfarbstoff angefärbt, um die Schnittumrisse auch im Fluoreszenzkontrast detektieren zu können. Die Erkennung der Umrisse erfolgt bevorzugt rechnerisch mittels herkömmlicher Algorithmen, wie beispielsweise dem Canny Algorithmus oder phase coherence basierten Algorithmen.

Dem Nutzer kann die Wahl überlassen werden, ein Merkmal oder eine Kombination von Merkmalen zur Berechnnung lokaler Koordinatensysteme auf den Schnitten auszuwählen. Der Nutzer kann Umrissstrukturen, Strukturen aus der Probe selbst oder auch gleichzeitig Umrissstrukturen und Strukturen aus der Probe als Merkmale auswählen.

Die Wahl des Schnittumrisses bietet den Vorteil eines gewöhnlicherweise hohen Kontrastes, was die Untersuchung auch von relativ kontrastarmen Schnitten erleichtert.

Die gewählten Merkmale dienen in einem weiteren Schritt zur Gewinnung von Informationen, die zur Berechnung lokaler Koordinatensysteme herangezogen werden können.

Eine Möglichkeit, robuste Informationen aus dem gewählten Merkmal zu gewinnen, besteht darin, mittels eines geeigneten Verfahrens Kanten aus dem vergrößerten Bild zu extrahieren. Dies kann mit verschiedenen Kantendetektoren, zum Beispiel einem Canny-Kantenfilter, geschehen. Eine Möglichkeit zur Steigerung der Zuverlässigkeit besteht darin, den oder die zur Extraktion benutzten Filter auf die typischerweise zu erwartende Kantenstruktur des aufgenommenen Kontrastes einzustellen, um die Filterantwort in Bezug auf Schmutz und Rauschen zu optimieren.

Eine Möglichkeit zur mathematischen Berechnung der lokalen Koordinatensysteme auf Basis der extrahierten Informationen unter Optimierung eines Ähnlichkeitsmaßes besteht in der Fourier-Mellin Korrelation (B.S. Reddy and B.N. Chatterji, "An FFT-Based Technique for Translation, Rotation, and Scale-Invariant Image Registration", IEEE Trans. Image Processing, vol. 5, no. 8, pp. 1266-1271, Aug. 1996). Auch weitere Ausgestaltungen basierend auf alternativen Optimierungsverfahren wie dem Levenberg-Marquardt Verfahren oder basierend auf lokalen Merkmalspunkten sind denkbar. Um eine hohe Verarbeitungsgeschwindigkeit bei gleichzeitig hoher Genauigkeit der berechneten Koordinatensysteme zu erreichen ist es dabei möglich, die Berechnung auf unterschiedlichen Bildskalen auszuführen. Dabei werden lokale Koordinatensysteme in einem großen Suchbereich zunächst auf einem Bild niedriger Auflösung berechnet. Anschließend wird das Ergebnis genutzt, um ein Berechnungsverfahren auf einem höher aufgelösten Bild zu initialisieren. Das Ergebnis der Berechnung ist die Verschiebung, Rotation und Skalierung der lokalen Koordinatensysteme zueinander.

Nicht diskriminative Strukturen, die für die Berechnung lokaler Koordinatensysteme störend sind, können in einer Weiterbildung des Verfahrens unterdrückt werden. Eine Möglichkeit besteht darin, Kantenbereiche, die aus weniger als einer vorbestimmten Anzahl zusammenhängender Pixel bestehen, zu entfernen und für die weitere Berechnung zu verwerfen.

In einer Weiterbildung des Verfahrens werden zweidimensionale Muster künstlicher in die ungeschnittene Probe eingebrachter Strukturen als Merkmale ausgewählt. Die künstlich in die ungeschnittene Probe eingebrachten Strukturen können, wie bereits weiter oben beschrieben, Voll- oder Hohlstrukturen umfassen. Insbesondere werden erfindungsgemäß Bohrungen bevorzugt, wie sie ebenfalls bereits weiter oben ausführlich beschrieben worden sind. Solche Strukturen werden bevorzugt so in die ungeschnittene Probe eingebracht, dass ihre zweidimensionalen Muster auf den Schnitten relativ konstant auf den Schnitten erscheinen und sich beispielsweise von Schnitt zu Schnitt nur unwesentlich oder überhaupt nicht unterscheiden. Bevorzugt werden wenigstens drei Bohrungen, besonders bevorzugt parallel zueinander und räumlich beabstandet, d.h. nicht auf einer Linie, in das Probenvolumen eingebracht. Die Probe wird dann etwa senkrecht zu den eingebrachten Bohrungen geschnitten, so dass die Bohrungen beispielsweise ein zweidimensionales Muster in der Schnittebene bilden, das die drei Spitzen eines gedachten Dreiecks markiert. Eine solche Anordnung der Bohrungen eignet sich ideal als Merkmal, um damit ein zweidimensionales lokales Koordinatensystem zu definieren. Durch die Parallelität der Bohrungen unterscheiden sich die zweidimensionalen Muster der Bohrungen von Schnitt zu Schnitt nur unwesentlich oder gar nicht. Entsprechend unterscheiden sich die daraus definierten lokalen Koordinatensysteme von Schnitt zu Schnitt nur unwesentlich oder gar nicht, was die spätere Übertragung eines Auswahlbereichs von einem Schnitt als korrespondierenden Nachbarbereich auf einen weiteren Schnitt wesentlich vereinfacht und die Genauigkeit der Übertragung erhöht.

In einer Erweiterung des Verfahrens ist es auch möglich, abgebildete Schnitte anhand der zur Berechnung der lokalen Koordinatensysteme ausgewählten Merkmale und/oder weiterer Merkmale zu sortieren. Die Sortierung kann beispielsweise automatisiert über die Minimierung der Merkmalsunterschiede erfolgen, so dass die Sortierfolge die ursprünglichen Positionen der Schnitte in der Probe wiedergibt. Die Minimierung der Merkmalsunterschiede erfolgt vorzugsweise rechnerisch mittels herkömmlicher Algorithmen, beispielsweise durch Kreuzkorrelation. Die Sortierung beschädigter Schnitte ist regelmäßig kaum möglich. Insbesondere aus diesem Grund können im Umfeld der Sortierung manuelle Korrekturmöglichkeiten vorgesehen sein. Nach einer Anwendung kann vor dem Sortierungsschritt eine Auswahlmöglichkeit vorgesehen sein, die es dem Benutzer ermöglicht, einzelne Schnitte, die sortiert werden sollen und/oder von der Sortierung ausgenommen werden sollen, auszuwählen und/oder abzuwählen. Nach einer weiteren Anwendung werden abgebildete Schnitte, die rechnerisch nicht oder nur unsicher in die Sortierfolge der abgebildeten Schnitte einsortiert werden konnten, markiert und dem Benutzer als nicht oder unsicher einsortiert ausgegeben. Der Nutzer erhält die Möglichkeit, den Schnitt manuell einzusortieren oder zu verwerfen. Das erfindungsgemäße Verfahren kann weiterhin vorsehen, dass der Benutzer wenigstens eine interessante Teilmenge der sortierten abgebildeten Schnitte auswählt und die anderen abgebildeten Schnitte verworfen werden.

Die Auswahl des wenigstens einen Auswahlbereichs kann manuell oder automatisiert erfolgen. Nach einer Ausgestaltung des Verfahrens wird der Auswahlbereich vorzugsweise manuell auf dem wenigstens einen abgebildeten Schnitt ausgewählt. Bevorzugt ist für den Benutzer eine Möglichkeit vorgesehen, die Auswahl insbesondere bei hoher Vergrößerung örtlich zu präzisieren oder zu verwerfen. Dazu wird der Auswahlbereich bei hoher Vergrößerung angefahren und vergrößert abgebildet. Der Benutzer kann den Auswahlbereich somit bei hoher Vergrößerung begutachten und verändern oder verwerfen. Nach einer anderen Ausgestaltung des Verfahrens wird der Auswahlbereich automatisiert erkannt. Bevorzugt erfolgt die automatisierte Erkennung anhand spezifischer beispielsweise subzellulärer Zielstrukturen wie beispielsweise Zellkernen, Mitochondrien, Chloroplasten etc. oder anhand spezifischer, beispielsweise optischer Signale wie Fluoreszenzsignalen. Bevorzugt sind im Umfeld der automatisierten Auswahl von Auswahlbereichen manuelle Korrekturmöglichkeiten vorgesehen, die eine nachträgliche örtliche Präzisierung oder Verwerfung des ausgewählten Bereichs ermöglichen.

Von dem ausgewählten Bereich wird die relative Lage in Bezug auf das für den abgebildeten Schnitt definierten lokalen Koordinatensystems ermittelt. Unter Berücksichtigung dieser Relativlage in Bezug auf den Schnitt, der Lage des abgebildeten Schnittes in Bezug auf die Vorrichtung sowie des für die Abbildung des Schnittes benutzten Vergrößerungsmaßstabs wird die Lage des Auswahlbereiches in Bezug auf die Vorrichtung ermittelt und gespeichert.

Die Relativlage des wenigstens einen Auswahlbereichs wird in das lokale Koordinatensystem wenigstens eines weiteren Schnittes übertragen, womit dort wenigstens ein korrespondierender Nachbarbereich festgelegt wird. Die Übertragung erfolgt vorzugsweise automatisiert, beispielsweise durch Koordinatentransformation. Das Verfahren kann ausgebildet sein, die Übertragung der Relativlage in die lokalen Koordinatensysteme aller weiteren abgebildeten Schnitte durchzuführen. In einer anderen Anwendung erfolgt die Übertragung beschränkt auf eine Teilmenge der abgebildeten Schnitte. Vorzugsweise erfolgt die Übertragung allein auf Schnitte, die von einem Benutzer vorher markiert wurden. In einer weiteren Anwendung erfolgt die Übertragung allein auf Schnitte, die bestimmten vordefinierten Kriterien entsprechen. Vorzugsweise erfolgt die Übertragung auf Schnitte, die zu dem Schnitt, auf dem der Auswahlbereich liegt, in vorbestimmten Grenzen beabstandet sind.

Unter Berücksichtigung der Relativlage des Nachbarbereiches innerhalb des lokalen Koordinatensystems des wenigstens einen weiteren Schnittes, der Lage des abgebildeten Schnittes in Bezug auf die Vorrichtung sowie des für die Abbildung des wenigstens einen weiteren Schnittes benutzten Vergrößerungsmaßstabs wird die Lage des Nachbarbereiches in Bezug auf die Vorrichtung ermittelt und gespeichert. Bevorzugt sind im Umfeld der Koordinatenübertragung manuelle Korrekturmöglichkeiten vorgesehen. Insbesondere kann vorgesehen sein, dass die Positionen der automatisiert ermittelten Nachbarbereiche korrigierbar sind. Diese Korrekturmöglichkeit ist insbesondere dann wichtig, wenn interessierende Probenregionen schräg zur Schnittebene in der Probe gelegen haben und sich damit die Lagen von Auswahlbereich und gewünschten Nachbarbereichen von Schnitt zu Schnitt unterscheiden. In einer Ausbildung des Verfahrens können die Nachbarbereiche manuell nachpositioniert werden. In einer weiteren Ausbildung des Verfahrens können einzelne Nachbarbereiche manuell nachpositioniert werden. Die Lagekorrektur der zwischen dem Auswahlbereich und einem nachpositionierten Nachbarbereich oder zwischen zwei nachpositionierten Nachbarbereichen liegenden unkorrigierten Nachbarbereiche kann rechnerisch erfolgen, beispielsweise durch Interpolation. Die Nachpositionierung kann am abgebildeten Schnitt erfolgen oder auch nachdem der zu korrigierende Nachbarbereich mit höherer Vergrößerung angefahren wurde.

Da das vorgeschlagene Verfahren Lageinformationen zu Auswahlbereich(en) und/oder Nachbarbereichen in Bezug auf die Vorrichtung bereitstellt, erfolgt die Abbildung des/der Auswahl- und/oder Nachbarbereich(e)s vorzugsweise automatisch. Dazu wird der Auswahl und/oder Nachbarbereich von der Vorrichtung vorzugsweise mit hoher Vergrößerung angefahren und vergrößert abgebildet. Bevorzugt sind im Umfeld der Abbildung der Auswahl- und/oder Nachbarbereiche manuelle Korrekturmöglichkeiten vorgesehen. Insbesondere kann vorgesehen sein, dass, nachdem ein Auswahl- oder Nachbarbereich angefahren wurde, vom Benutzer manuell der Bildausschnitt und/oder Bildaufnahmeparameter, insbesondere die Fokusposition, korrigiert werden können. Ebenso kann vorgesehen sein, dass der Benutzer nach einer ersten Abbildung des Auswahl- und/oder Nachbarbereiches die Möglichkeit erhält, Korrekturen, insbesondere am Bildausschnitt und/oder an den Bildaufnahmeparametern durchzuführen. Es wird dann eine zweite, um die korrigierten Parameter korrigierte Abbildung erzeugt und anstelle oder zusätzlich zu dem ersten Abbild gespeichert. Es kann vorgesehen sein, die an einem bestimmten Auswahl- und/oder Nachbarbereich vorgenommenen Korrekturen auf die weiteren abzubildenden Auswahl- und/oder Nachbarbereich(e) vollständig oder teilweise anzuwenden, beispielsweise indem die Korrekturen auf die weiteren abzubildenden Auswahl- und/oder Nachbarbereich(e) interpoliert werden. Die mit einer Korrektur des Bildausschnittes verbundenen Änderungen der Koordinatendaten werden vorzugsweise gespeichert. Eine Korrekturmöglichkeit des Bildausschnittes ist insbesondere dann wichtig, wenn interessierende Regionen schräg im Probenvolumen gelegen haben und deswegen ein interessierender Bereich und seine Nachbarbereiche in Abhängigkeit zur Schnittebene des jeweiligen Schnittes lateral unterschiedlich positioniert sind. Das erfindungsgemäße Verfahren kann vorsehen, dass einige der korrespondierenden Nachbarbereiche, die eine schräg im Probenvolumen liegende Region abbilden, in ihrer Position korrigiert werden und die Korrekturen auf dazwischen liegende Schnitte interpoliert werden. Genauso gut ist es auch möglich, jeden einzelnen Nachbarbereich aus einer Serie von Nachbarbereichen zu korrigieren.

Das Verfahren kann dahingehend ausgebildet sein, dass ein abgebildeter Auswahlbereich und dessen jeweilige(r) Nachbarbereich(e) jeweils vollständig oder teilweise zu Bildstapeln registriert und diese dann vollständig oder teilweise zu dreidimensionalen Volumina zusammengesetzt werden. Bevorzugt erfolgt die Registrierung paarweise zwischen benachbarten korrespondierenden Bereichen, wobei bevorzugt der abgebildete Auswahlbereich als Referenzbild dient, das mit dem nächstkommend abgebildeten Nachbarbereich verglichen wird und wobei der Vorgang mit jedem fortlaufenden zur der Bildserie gehörendem abgebildeten Nachbarbereich wiederholt wird. Besonders bevorzugt dienen vorbestimmte Merkmale innerhalb der abgebildeten Bereiche als Orientierungspunkte, was die Registrierung der Bilddaten erleichtert. Als Merkmale kommen insbesondere die zweidimensionalen Muster künstlicher in die ungeschnittene Probe eingebrachter Strukturen in Frage. Soweit diese in einer vorbestimmten Weise in die Probe eingebracht werden, sind die zweidimensionalen Muster jeder Schnittebene zwangläufig ebenfalls von einer vorbestimmten Geometrie. Durch rechnerischen Vergleich der vorbestimmten mit der tatsächlich auf dem Schnitt vorgefundenen Geometrie, können Verzerrungen erkannt und zumindest auf Teilbereiche des Schnittes extrapoliert werden, womit der Schnitt zumindest teilweise entzerrt wird. Die anschließende dreidimensionale Rekonstruktion der Bilddaten zu einem dreidimensionalen Bild-Datenvolumen erfolgt vorzugsweise rechnerisch mittels herkömmlicher Algorithmen wie Kreuzkorrelation, Disparity Analysis oder Rendering-Algorithmen, insbesondere Volumen-Rendering oder Surface-Rendering.

In einer Weiterbildung des Verfahrens wird ein Probenträger verwendet, der mit wenigstens einer Justiermarkierung versehen ist, die ein globales, für den Probenträger individuell gültiges Koordinatensystem festlegt. Bevorzugt wird die Justiermarkierung angefahren und abgebildet, um die die Lage der Justiermarkierung in Bezug auf die verwendete Vorrichtung zu ermitteln. Besonders bevorzugt werden die Lagen von Schnitten auf dem Probenträger, von Auswahl und/oder Nachbarbereichen ebenfalls in Bezug auf das durch die Justiermarkierung festgelegte Koordinatensystem ermittelt, um den problemlosen Wechsel des Probenträgers zwischen verschiedenen Vorrichtungen zu ermöglichen. Wird der Probenträger einer weiteren Vorrichtung zur vergrößerten Abbildung von Proben zugeführt, und wird mit dieser die Lage der Justiermarkierung in Bezug auf die weitere Vorrichtung ermittelt, können, soweit ein entsprechender Koordinatendatenaustausch zwischen den Vorrichtungen erfolgt, alle vorher mit der ersten Vorrichtung abgebildeten Schnitte, Auswahl und/oder Nachbarbereiche mit der weiteren Vorrichtung automatisiert angefahren und abgebildet werden. Der Benutzer muss sich nicht darum kümmern, zuvor definierte Bereiche im zweiten Mikroskop wieder neu zu finden. Die von der ersten Vorrichtung übermittelten Koordinatendaten müssen lediglich in Bezug auf die weitere Vorrichtung, vorzugsweise mittels Koordinatentransformation, umgerechnet werden. Vorteilhaft ist ferner, dass durch die Übertragung der Lagedaten insbesondere der Auswahl- bzw. Nachbarbereiche diese direkt von der weiteren Vorrichtung anfahrbar sind, ohne dass mit der zweiten Vorrichtung erneut die Schnittübersichten abgebildet und lokale Koordinatensysteme definiert werden müssten. Damit verringern sich die Aufnahmezeiten, was die Abbildungsqualität erhöht, weil die Schnitte weniger geschädigt werden.

Nach einer bevorzugten Ausgestaltung des Verfahrens werden die auf einem Probenträger angeordneten Schnitte und/oder die Auswahl- und/oder Nachbarbereiche mit einer lichtmikroskopisch abbildenden Vorrichtung und zuvor oder danach mit einer teilchenstrahlmikroskopisch abbildenden Vorrichtung abgebildet. Unter dem Begriff Lichtmikroskopie wird dabei im Sinne dieser Beschreibung jedes Mikroskopieverfahren verstanden, das zur Abbildung den optischen Gesetzen gehorchende Strahlung, insbesondere im sichtbaren Bereich, also Licht, verwendet. Teilchenstrahlenmikroskopie im Sinne dieser Beschreibung ist dann gegeben, wenn eine Abbildung mittels eines Strahls geladener Teilchen wie zum Beispiel Elektronen oder Ionen erfolgt, beispielsweise in Form der Elektronenstrahlmikroskopie oder der Ionenstrahlmikroskopie. Der Probenträger muss in diesem Fall sowohl für die Lichtmikroskopie als auch für die Teilchenstrahlmikroskopie geeignet sein. Die Eignung für die Teilchenstrahlmikroskopie bedingt, dass der Probenträger elektrisch leitfähig und vorzugsweise nicht oder nur in tolerierbaren, vorbestimmten Grenzen magnetisierbar ist. Vorzugsweise ist der Probenträger so ausgestaltet, dass ein Probenträgerelement z.B. ein übliches, oder elektrisch leitfähig und transparent beschichtetes Deckglas oder alternativ ein leitfähiges Netz, über ein vorzugsweise im Probenträger ausgebildetes Fenster gelegt werden kann. Das Probenträgerelement trägt die Probe bzw. die Schnitte und kann vorzugsweise mit einer Befestigungseinrichtung über dem Fenster fixiert werden. Durch diese Fixierung ist das Objekt auf dem Probenträger befestigt und kann sowohl mit Lichtmikroskopie als auch mit Teilchenstrahlmikroskopie untersucht werden, ohne dass ein Umbetten auf andere Träger erforderlich ist. Vorzugsweise wird das Probenträgerelement mit einer Feder in den Probenträger geklemmt. Der Probenträger ist hierbei vorzugsweise so ausgeführt, dass oberseits für das Objektträgerelement passend eine Aussparung vorgesehen ist, in die das Objektträgerelement sicher passend eingelegt und anschließend mit der Feder klemmend befestigt werden kann, wobei das Fenster mittig unter der Aussparung für das Objektträgerelement angeordnet ist. Als Federmaterial eignet sich jedes federnde Material, soweit dieses elektrisch leitfähig und vorzugsweise nicht oder nur in tolerierbaren, vorbestimmten Grenzen magnetisierbar ist. Vorzugsweise ist der Probenträger mit wenigstens einer Justiermarkierung, wie erwähnt, ausgestattet. Besonders bevorzugt werden drei Justiermarkierungen verwendet, die ein für den Probenträger gültiges Koordinatensystem definieren. Die Justiermarkierungen sind vorzugsweise als L-förmige Markierungen gewählt. Die Markierung ist bevorzugt als Doppelmarkierung vorgesehen, wobei die eine Markierung bevorzugt die größere Widerholung der kleineren Markierung ist. Damit ist eine leichtere Wiederauffindbarkeit der Justiermarkierung gewährleistet. Die Feinkalibrierung der mikroskopseitigen Mechanik wird bevorzugt durch die kleinere der beiden Markierungsstrukturen gewährleistet. Die lichte Weite der kleineren Durchgangsstruktur ist bevorzugt zwischen 0,5 µm und 50 µm, besonders bevorzugt zwischen 2 µm und 20 µm breit und wird bevorzugt mittels Lasergravur in die Markerfolie eingebracht. Die Justiermarkierung(en) können als Durchgangsstrukturen durch den Probenträger ausgeführt sein. In einer bevorzugten Ausführungsform werden die Justiermarkierungen als Durchgangsstrukturen Markerfolien eingebracht, welche mittig über Öffnungen in dem Probenträger platziert wird. Vorzugsweise sind in dem Probenträger Aussparungen mittig über den Öffnungen vorgesehen, in die die Markerfolien passend einlegbar sind. Bevorzugt sind die Markerfolien mit dem Probenträger verschweißt.

In einer Erweiterung des Verfahrens ist es möglich, wenigstens einen interessierenden Teilbereich innerhalb eines zuvor abgebildeten Auswahl- oder Nachbarbereiches festzulegen. Durch Übertragung dessen Lage auf wenigstens einen weiteren Schnitt wird dort wenigstens ein Nachbarteilbereich festgelegt. Die Übertragung der Lagedaten erfolgt in der weiter oben schon für die Übertragung der Auswahlbereiche beschriebenen Weise anhand der jeweilig für die Auswahl- oder Nachbarbereiche definierten lokalen Koordinatensysteme. Nachdem die Relativlage zu der wenigstens einen Justiermarkierung ermittelt ist, können Teilbereich und Nachbarteilbereich(e) von der weiteren Vorrichtung direkt automatisiert angefahren und abgebildet werden. Das Verfahren kann aber auch so eingerichtet sein, dass Auswahl- und/oder Nachbarbereiche vor der Festlegung eines Teilbereichs von der weiteren Vorrichtung abgebildet werden und der Teilbereich erst anhand dieser Abbildungen festgelegt wird.

Bevorzugt werden Auswahl- und/oder Nachbarbereiche bzw. Teil- und/oder Nachbarteilbereiche von der weitern Vorrichtung automatisiert angefahren und abgebildet. Vor oder nach der Abbildung können Korrekturmöglichkeiten vorgesehen sein. Insbesondere kann vorgesehen sein, dass, nachdem ein Auswahl-, Nachbar-, Teil- oder Nachbarteilbereich angefahren wurde, vom Benutzer manuell der Bildausschnitt und/oder Bildaufnahmeparameter, insbesondere die Fokusposition, korrigiert werden können. Ebenso kann vorgesehen sein, dass der Benutzer nach einer ersten Abbildung des Auswahl-, Nachbar-, Teil- oder Nachbarteilbereichs die Möglichkeit erhält, Korrekturen, insbesondere am Bildausschnitt und/oder an den Bildaufnahmeparametern durchzuführen. Es wird dann eine zweite, um die korrigierten Parameter korrigierte Abbildung erzeugt und anstelle oder zusätzlich zu dem ersten Abbild gespeichert. Es kann vorgesehen sein, die an einem bestimmten Auswahl-, Nachbar-, Teil- oder Nachbarteilbereich vorgenommenen Korrekturen auf die weiteren abzubildenden Auswahl-, Nachbar-, Teil- oder Nachbarteilbereich(e) vollständig oder teilweise anzuwenden, beispielsweise indem die Korrekturen auf die weiteren abzubildenden Auswahl-, Nachbar-, Teil- oder Nachbarteilbereich(e) interpoliert werden. Die mit einer Korrektur des Bildausschnittes verbundenen Änderungen der Koordinatendaten werden vorzugsweise gespeichert.

Nach einer bevorzugten Ausführung liegen wenigstens zwei Abbildungen wenigstens eines Bereiches vor, eine wurde von der ersten Vorrichtung erstellt und die weitere von der weiteren Vorrichtung. Diese mit den verschiedenen Vorrichtungen erstellten Abbildungen werden nach einer Erweiterung des Verfahrens paarweise miteinander korreliert, das heißt, die beiden Datensätze werden überlagert und in einem resultierenden korrelativen Bilddatensatz ausgegeben.

Nach einer weiteren bevorzugten Variante des Verfahrens ist vorgesehen, dass eine mit der zweiten Vorrichtung erstellte Bildserie einer Mehrzahl von abgebildeten korrespondierenden Nachbarbereichen inklusive oder exklusive des korrespondierenden Auswahlbereichs mit der entsprechenden Bildserie aus der weiteren Vorrichtung rechnerisch korreliert wird. Die Korrelation resultiert in einem korrelativen Bildstapel. Im Umfeld der rechnerischen Korrelation können manuelle Korrekturmöglichkeiten vorgesehen sein wie insbesondere manuelle Nachjustiermöglichkeiten der Überlagerung.

Es kann weiterhin vorgesehen sein, dass ein korrelativer Bildstapel zu einem dreidimensionalen Bild-Datenvolumen rekonstruiert wird. Die Rekonstruktion der Bilddaten zu einem dreidimensionalen Bild-Datenvolumen erfolgt vorzugsweise rechnerisch mittels herkömmlicher Rendering-Algorithmen, die insbesondere Volumen-Rendering oder Surface-Rendering Methoden beinhalten.

Es versteht sich, dass insbesondere Änderungen in der Abfolge der einzelnen Verfahrensschritte als von der vorliegenden Erfindung mit umfasst gelten.

Im Rahmen der Erfindung ist auch eine Vorrichtung zur vergrößerten Abbildung von Proben vorgesehen. Die erfindungsgemäße Vorrichtung umfasst wenigstens eine Aufnahmeeinrichtung für einen Probenträger, wenigstens eine steuerbare Komponente, sowie eine Recheneinrichtung, wobei die Bestandteile der Vorrichtung eingerichtet sind, das erfindungsgemäße Verfahren durchzuführen.

Insbesondere ist die steuerbare Komponente der Vorrichtung eingerichtet, vorbestimmte Positionen auf dem Probenträger anzufahren, Unter dem Begriff Anfahren wird vorliegend verstanden, dass vorbestimmte Positionen auf einem Probenträger gezielt in das Sehfeld der Vorrichtung gelenkt werden können. Bevorzugt wird dabei auch die Vergrößerungsstufe angepasst, so dass beispielsweise ein Auswahlbereich relativ formatfüllend abgebildet wird. Bevorzugt handelt es sich bei der steuerbaren Komponente um wenigstens einen Stellmotor, der eine vorrichtungsseitige Mechanik zum Bewegen des Probenträgers, beispielsweise einen Probentisch, verstellt. Vorzugsweise kann die aktuelle Position der Mechanik ermittelt werden.

Die Recheneinrichtung ist insbesondere zur Steuerung der wenigstens einen steuerbaren Komponente eingerichtet. Bevorzugt existiert ein vorrichtungsseitiges Bezugssystem, und die Recheneinrichtung überwacht die Stellung der Mechanik zum Bewegen des Probenträgers zu diesem Bezugssystem. Das Erreichen einer vorbestimmten Position wird durch einen Regelkreis überwacht. Weiterhin ist die Recheneinrichtung bevorzugt eingerichtet, um Abbildungen oder Teile von Abbildungen dahingehend auszuwerten um für diese Abbildungen oder Abbildungsteile individuell gültige lokale Koordinatensysteme zu ermitteln, die Punkten oder Bereichen innerhalb der Gültigkeit eines solchen Koordinatensystems eine relative Lageinformation zuordnen. Bevorzugt erkennt die Recheneinrichtung in den Abbildungen vorbestimmte Merkmale, insbesondere Konturen und/oder Strukturen, um anhand dieser Merkmale die individuell gültigen lokalen Koordinatensysteme zu definieren.

Die Recheneinrichtung ist vorzugsweise weiterhin eingerichtet, um die Relativlage von Punkten oder Bereichen innerhalb eines solchen Koordinatensystems zu ermitteln, um diese Relativlage in weitere Abbildungen mit ähnlichen Koordinatensystemen zu übertragen und um die Relativlage und/oder übertragene Relativlage in Bezug zu setzen zu weiteren Koordinatensystemen, beispielsweise zu dem Bezugssystem der Vorrichtung. Sobald die ermittelten Relativlagen in Bezug gesetzt sind zu dem Bezugssystem der Vorrichtung, sind die Relativlagen automatisiert anfahrbar.

Eine solcherart eingerichtete Vorrichtung ist in der Lage, automatisiert einen Auswahlbereich innerhalb eines Schnittes auf benachbarte Schnitte zu übertragen womit dort korrespondierende Nachbarbereiche definiert werden. Nachbarbereiche und/oder Auswahlbereiche können automatisiert von der Vorrichtung angefahren und insbesondere bei hoher Auflösung abgebildet werden. Die Festlegung von Nachbarbereichen wird auf diese Weise erleichtert und ist sehr schnell möglich. Die Abbildung interessierender Auswahl- und korrespondierender Nachbarbereiche kann zudem in hoher Auflösung erfolgen.

Die erfindungsgemäße Vorrichtung kann zur vergrößerten Abbildung mit einem bestimmten vergrößert abbildenden Verfahren eingerichtet sein. Nach einer Ausführung ist die Vorrichtung als Lichtmikroskop eingerichtet. Nach einer anderen Ausführung ist die Vorrichtung als Teilchenstrahlmikroskop eingerichtet. Nach einer dritten Ausführung beherrscht die Vorrichtung unterschiedliche vergrößert abbildende Verfahren. Die Abbildungseinrichtung kann beispielsweise als Kombinationsmikroskop eingerichtet sein, das sowohl die Lichtmikroskopie als auch die Teilchenstrahlenmikroskopie beherrscht.

Die Aufnahmeeinrichtung für den Probenträger an der Vorrichtung kann so gestaltet sein, dass sie den Probenträger direkt aufnimmt. Nach einer Ausführungsform kann beispielsweise eine Klemmeinrichtung vorgesehen sein, mit der der Probenträger klemmend an der Vorrichtung fixiert wird. Es ist aber auch genauso gut möglich, den Probenträger indirekt über ein Zwischenstück oder mittels eines Adapters mit der Vorrichtung zu verbinden, wobei der Adapter vorteilhafterweise eine Montageeinrichtung zum Befestigen des Adapters an der Aufnahmeeinrichtung der Vorrichtung und eine Halteeinrichtung zum Fixieren des Probenträgers aufweist.

Die wenigstens eine steuerbare Komponente der Vorrichtung kann eingerichtet sein, die Probenaufnahmeeinrichtung relativ zur Abbildungseinrichtung zu verschieben. Beispielsweise kann die Probenaufnahme in Form eines Probentisches gestaltet sein und die steuerbare Komponente kann als Stellmotor eingerichtet sein, der den Probentisch bewegt. Genauso gut ist es aber auch möglich, dass die steuerbare Komponente eingerichtet ist, die Abbildungseinrichtung relativ zum Probenträger zu verschieben oder einen abbildenden Strahl zu lenken. Beispielsweise kann die steuerbare Komponente als Ablenkspule eingerichtet sein, die einen abbildenden Strahl auf vorbestimmtet Positionen des Probenträgers lenkt. Natürlich ist auch eine Kombination möglich, bei der die wenigstens eine elektrisch steuerbare Komponente eingerichtet ist, sowohl den Probenträger relativ zur Abbildungseinrichtung zu bewegen als auch die Abbildungseinrichtung relativ zum Probenträger. Weiterhin ist es auch möglich, mehrere entsprechend eingerichtete steuerbare Komponenten vorzusehen, die gemeinsam die Funktion erfüllen, vorbestimmte Positionen auf dem Probenträger anzufahren.

Vorteilhafte Weiterbildungen der Vorrichtung sind entsprechend den Weiterbildungen des Verfahrens ausgebildet.

Die Vorrichtung kann zur Verwendung nach einem Aspekt oder Ausführungsbeispiel des Verfahrens eingerichtet sein.

Nachfolgend wird die Erfindung beispielhaft anhand der beigefügten Zeichnungen, die auch erfindungswesentliche Merkmale offenbaren, noch näher erläutert. Es zeigen:
- Fig. 1: ein Ablaufschema einer Ausgestaltung des erfindungsgemäßen Verfahrens,
- Fig. 2: die Erweiterung des Ablaufschemas der Fig. 1 um mehrere fakultative Schritte,
- Fig. 3: weitere fakultative Erweiterungen des Verfahrens der Fig. 1,
- Fig. 4: eine Ausgestaltung der erfindungsgemäßen Vorrichtung, die eingerichtet ist, das Verfahren nach Fig. 1 durchzuführen, und
- Fig. 5: eine Probe mit nach einer Erweiterung des Verfahrens künstlich eingebrachten Bohrungen.

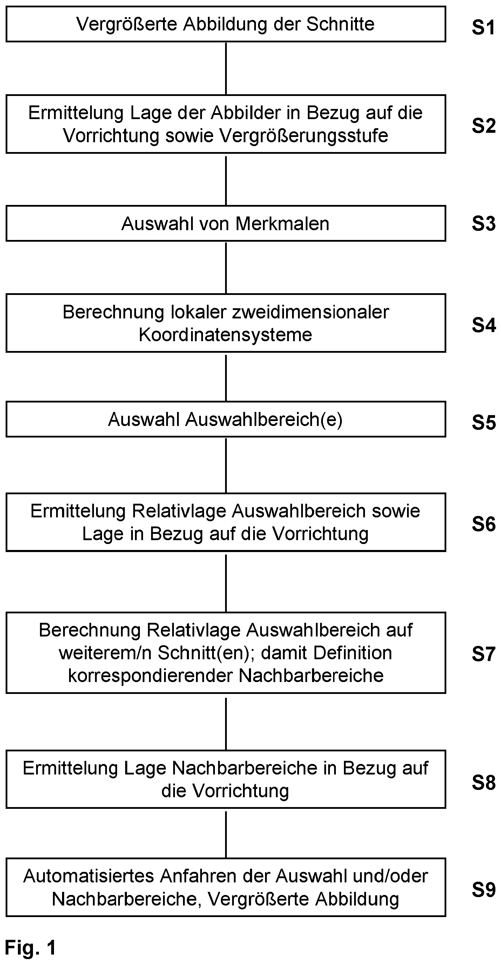

Fig. 1 zeigt ein Ablaufschema nach einer Ausgestaltung des erfindungsgemäßen Verfahrens. Ziel des Verfahrens nach Fig. 1 ist es, einen für eine vorbestimmte biologischen Fragestellung interessierenden räumlichen Bereich einer in dünnen Schnitten auf einem Glasobjektträger vorliegenden biologischen Probe, lichtmikroskopisch möglichst hochaufgelöst zu lokalisieren, wobei der interessierende Bereich über mehrere Schnitte der Schnittserie verteilt vorliegt.

Dazu werden zunächst in einem Schritt S1 die Schnitte der biologischen Probe lichtmikroskopisch abgebildet. Die Abbildungen der Schnitte werden mittels einer Digitalkamera aufgenommen. Das verwendete Mikroskop ist eingerichtet, die einzelnen Schnitte im Hellfeld, im Dunkelfeld, im Phasenkontrast als auch mittels Fluoreszenzanregung abzubilden. Es ist somit möglich, die Schnitte in verschiedenen mikroskopischen Kontrasten abzubilden, womit ausgangs von Schritt S1 mehrere Abbildungen desselben Schnittes in verschiedenen mikroskopischen Kontrasten vorliegen können. Die digitalen Bilddaten werden von der Digitalkamera an einen mit der Kamera verbundenen Recheneinheit weitergegeben. In dem vorliegenden Ausführungsbeispiel handelt es sich bei der Recheneinheit um einen mit der Digitalkamera verbundenen Personal Computer (PC) mit angeschlossenem Monitor zur Anzeige der Abbildungen. Der Objektträger ist über eine Probenträgeraufnahme mit dem Lichtmikroskop lagefest verbunden.

In einem Schritt S2 wird die Lage der Schnitte in Bezug auf das Mikroskop ermittelt und ebenso wie die verwendete Vergrößerungsstufe an die Recheneinheit übermittelt und dort gespeichert. Im einfachsten Fall ist das Mikroskop mit einem motorisierten Kreuztisch ausgestattet und die Lageermittelung der Schnitte erfolgt über die von einem Schrittmotor ausgegebenen Positionsdaten. Das Lichtmikroskop ist ebenso wie die Digitalkamera mit der Recheneinheit verbunden. Die Recheneinheit ist in der Lage, den von der Kamera zugespielten Bilddaten Positionsdaten zuzuordnen.

In einem Schritt S3 erfolgt die Auswahl eines Merkmals oder mehrerer Merkmale, das in einem Schritt S4 zur Berechnung von lokalen Koordinatensystemen dient. Als Merkmale hervorragend geeignet sind Strukturen, die einen hohen Kontrast in dem lichtmikroskopischen Bild aufweisen. Versuche haben gezeigt, dass Schnittumrissstrukturen in vielen Fällen besonders geeignet sind, weil sie aufgrund ihres oft hohen Kontrasts robuste Informationen liefern, die sich gut für die Berechnung der lokalen Koordinatensysteme eignen. Die Auswahl der Merkmale nach S3 ist so ausgestaltet, dass die Recheneinheit eingerichtet ist, aus den zugespielten Bilddaten automatisiert Merkmale auszuwählen, die zur Berechnung der lokalen Koordinatensysteme herangezogen werden. Es sind jedoch auch manuelle Eingriffmöglichkeiten vorgesehen, die dem Nutzer die Möglichkeit geben, manuell am Monitorbild oder anhand eines Auswahlmenüs Merkmale zu wählen, bzw. aus einer von der Recheneinheit vorgeschlagenen Vorauswahl bild- bzw. menügesteuert auszuwählen. Für eine automatisierte Auswahl bzw. Vorauswahl an Merkmalen ist in der Recheneinheit ein Canny-Kantenfilter implementiert, der Kanten aus dem vergrößerten Bild extrahiert. Um die Filterantwort in Bezug auf Schmutz und Rauschen zu optimieren, ist der Canny-Kantenfilter bereits auf typischerweise zu erwartende Kantenstrukturen des aufgenommenen Kontrastes voreingestellt.

Zur mathematischen Berechnung der lokalen Koordinatensysteme in Schritt S4 erfolgt auf Basis der aus den gewählten Merkmalen extrahierten Kanten. Dies erfolgt unter Optimierung eines Ähnlichkeitsmaßes wozu die die Recheneinheit die Fourier-Mellin Korrelation verwendet. Um eine hohe Verarbeitungsgeschwindigkeit bei gleichzeitig hoher Genauigkeit der berechneten Koordinatensysteme zu erreichen, ist die Recheneinheit außerdem eingerichtet, die Berechnung auf unterschiedlichen Bildskalen auszuführen. Dabei werden lokale Koordinatensysteme zunächst basierend auf dem in S1 aufgenommenen Bild niedriger Auflösung berechnet. Anschließend wird das Ergebnis genutzt, um ein Berechnungsverfahren auf einem weiteren höher aufgelösten Bild des ausgewählten Merkmals zu initialisieren. Die Recheneinheit ist weiterhin eingerichtet, nicht diskriminative Strukturen, die für die Berechnung lokaler Koordinatensysteme störend sind, zu unterdrücken. Dies erfolgt, indem Kantenbereiche, die aus weniger als einer vorbestimmten Anzahl zusammenhängender Pixel bestehen, entfernt und für die weitere Berechnung verworfen werden.

In einem Schritt S5 erfolgt die Auswahl eines Auswahlbereichs auf einem der Schnitte. Dieser Auswahlbereich repäsentiert einen flächigen Ausschnitt des interessierenden räumlichen Bereichs der biologischen Probe. Dies kann manuell durch den Nutzer durch manuelle Begutachtung der Abbildungen aus Schritt S1 an dem Monitor oder automatisiert erfolgen. Die automatisierte Auswahl des Auswahlbereichs erfolgt in analoger Weise wie die Auswahl von Merkmalen in Schritt S3 mittels Kantenfiltern, oder anderen für die jeweilige Auswahlaufgabe optimierten Algorithmen, die ebenfalls in der Recheneinheit implementiert sind. Abhängig von der Untersuchungsaufgabe können die Auswahlbereiche natürlich sehr unterschiedlicher Natur sein. Beispielsweise ist es ein häufiger Nutzerwunsch, in Schnitten von biologischem Probenmaterial bestimmte molekulare Zielstrukturen wie Proteine, DNA, oder RNA zu lokalisieren. Oft werden die gewünschten Zielstrukturen vorab markiert, beispielsweise fluoreszenzmarkiert, um deren Detektion zu erleichtern. Mittels der implementierten Filter ist die Recheneinheit in der Lage, solcherart markierte Zielstrukturen zu erkennen und als Auswahlbereiche festzulegen.

In einem darauf folgenden Schritt S6 wird die Relativlage des im Schritt S5 festgelegten Auswahlbereichs in Bezug auf das lokale Koordinatensystem des Schnitts ermittelt. Unter Berücksichtigung dieser Relativlage in Bezug auf den Schnitt, der Lage des abgebildeten Schnittes in Bezug auf die Vorrichtung sowie des für die Abbildung des Schnittes benutzten Vergrößerungsmaßstabs wird die Lage des Auswahlbereiches in Bezug auf die Vorrichtung ermittelt und gespeichert.

In einem Schritt S7 wird die Relativlage des Auswahlbereichs in die im Schritt S4 erstellten lokalen Koordinatensysteme der anderen Schnitte der Schnittserie übertragen, womit auf diesen Schnitten Nachbarbereiche erzeugt werden, die zu dem Auswahlbereich korrespondieren. Die Übertragung erfolgt mittels Koordinatentransformation, das heißt, die Koordinaten des Auswahlbereichs in Bezug auf dessen lokales Koordinatensystem werden in die lokalen Koordinatensysteme der anderen Schnitte übertragen.

In einem Schritt S8 werden die Lagen der Nachbarbereiche in Bezug auf die Vorrichtung ermittelt und gespeichert. Dies geschieht unter Berücksichtigung der Relativlage der Nachbarbereiche innerhalb der lokalen Koordinatensysteme der weiteren Schnitte, der Lage der weiteren Schnitte in Bezug auf die Vorrichtung sowie der für die Abbildung der weiteren Schnittes benutzten Vergrößerungsmaßstäbe.

Mit den nun vorliegenden Koordinatendaten ist die Recheneinheit in der Lage, das Mikroskop so anzusteuern, dass von den Auswahl- und Nachbarbereichen automatisiert Abbildungen in hoher Auflösung erstellt werden können. Dies erfolgt in einem das Verfahren abschließenden Schritt S9.

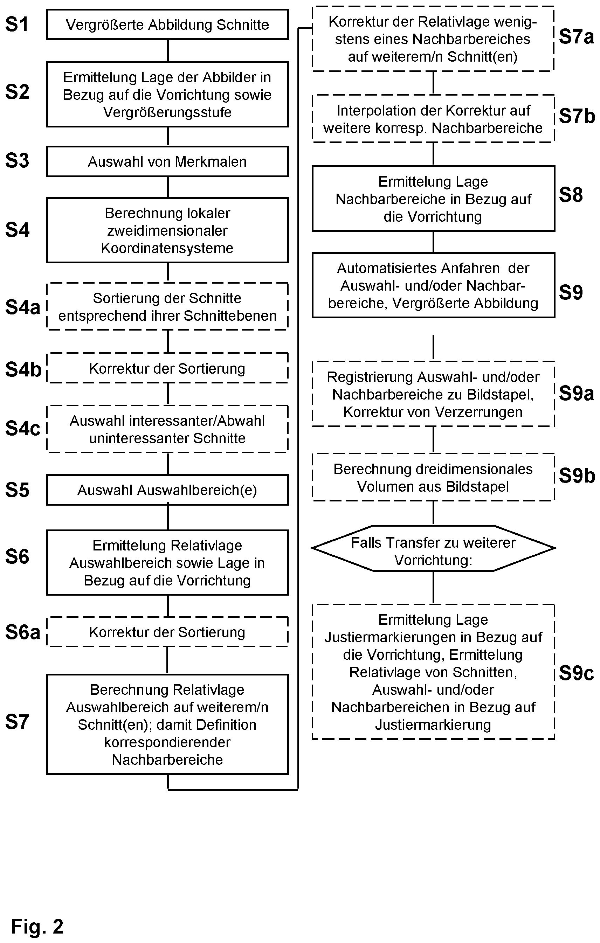

Das gegenüber der Fig 1 erweiterte Ablaufschema des Verfahrens nach Fig 2 beinhaltet eine Anzahl zusätzlicher Schritte, die durch Boxen mit unterbrochener Linierung kenntlich gemacht sind. Die zusätzlichen Verfahrensschritte können einzeln, in beliebigen Kombinationen oder alle zusammen dem Verfahren nach Fig. 1 hinzugefügt werden. Um unnötige Widerholungen zu vermeiden, wird bezüglich der Schritte S1 bis S8, die in Fig 2 als Boxen ohne Unterbrechung der Linierung dargestellt sind, auf die entsprechenden Ausführungen gemäß Fig. 1 verwiesen.

Das Verfahren nach der Fig. 2 ist bezüglich der Schritte S1 bis S4 identisch zu dem Verfahren der Fig. 1. Zusätzlich weist das Verfahren nach der Fig. 2 den Schritt S4a auf Im Schritt S4a werden die im Schritt S1 abgebildeten Schnitte entsprechend der Ebenen sortiert, in der die Schnitte ursprünglich in der biologischen Probe angeordnet vorlagen. Es bleibt dabei dem Nutzer überlassen, in einer Vorauswahl diejenigen Schnitte der Schnittserie, die der Nutzer sortiert haben möchte, auszuwählen. Die Sortierung wird anschließend durch die Recheneinheit durchgeführt. Die Recheneinheit erkennt die aus den in Schritt S3 von den gewählten Merkmalen extrahierten Informationen von Schnitt zu Schnitt die Unterschiede und sortiert über die Minimierung der Unterschiede die Schnitte entsprechend ihrer ursprünglichen Positionen in der Probe. Dies erfolgt über die zwei-dimensionale Kreuzkorrelation der aus dem gewählten Merkmal jeweils extrahierten Kanteninformationen.

In einem weiteren Schritt 4b werden dem Nutzer beispielsweise über den Monitor diejenigen Schnitte ausgegeben, für die die Sortierung in Schritt S4a fehlgeschlagen ist,. Der Nutzer erhält die Möglichkeit, die nicht sortierten Schnitte zu verwerfen, d.h. endgültig aus der Sortierfolge zu entfernen, oder manuell in die Ausgangs von Schritt S4a ausgegebene Sortierfolge einzugliedern.

Der anschließende Schritt S4c sieht vor, dass der Nutzer aus der Ausgangs von Schritt S4a ausgegebenen Sortierfolge eine für seine Untersuchungsaufgabe interessante Teilmenge an Schnitten oder mehrere Teilmengen an Schnitten für den weiteren Verfahrensablauf auswählt.

In den Schritten S5 und S6 gleicht das Verfahren der Fig 2 wiederum dem in der Fig. 1 angegebenen Verfahren.

In einem weiteren gegenüber dem Verfahren in Fig 1 neu eingeführten Schritt S6a ist zusätzlich eine Korrekturmöglichkeit vorgesehen, die es dem Nutzer ermöglicht, die Auswahl des Auswahlbereichs unter hoher Vergrößerung örtlich zu präzisieren oder zu verwerfen. Dazu wird der Auswahlbereich bei hoher Vergrößerung angefahren und vergrößert abgebildet. Der Benutzer kann den Auswahlbereich somit bei hoher Vergrößerung begutachten und verändern oder verwerfen.

Zwischen die Verfahrensschritte S7 und S8 des Verfahrens nach der Fig. 1 sind bei dem in Fig. 2 vorgestellten Ausführungsbeispiel die weiteren Schritte S7a und S7b eingefügt. In Schritt S7a erfolgt eine Korrektur der in Schritt S7 automatisiert ermittelten Relativlagen der Nachbarbereiche auf den weiteren Schnitten. Dabei nimmt der Nutzer am Monitor die Positionskorrektur zumindest eines Nachbarbereiches vor. In einem anschließenden Schritt S7b werden die weiteren Nachbarbereiche durch die Recheneinheit nachpositioniert. Dazu interpoliert die Recheneinheit die Lageverschiebung des manuell nachkorrigierten Nachbarbereiches auf die weiteren Nachbarbereiche.

Das Verfahren nach Fig. 2 sieht gegenüber dem Verfahren nach Fig 1 die weiteren Schritte S9a, S9b, S9c und S9d vor.

Der Schritt S9a sieht vor, dass die Recheneinheit den abgebildeten Auswahlbereich und die Nachbarbereiche vollständig oder teilweise zu einem Bildstapel registriert. Die Auswahl, ob der Auswahlbereich und alle Nachbarbereiche oder nur eine Teilmenge davon registriert werden, bleibt dem Nutzer überlassen. Die Registrierung erfolgt paarweise zwischen benachbarten korrespondierenden Bereichen. Der abgebildete Auswahlbereich dient als Referenzbild, das mit dem nächstkommend abgebildeten Nachbarbereich verglichen wird und wobei der Vorgang mit jedem fortlaufenden zur der Bildserie gehörendem abgebildeten Nachbarbereich wiederholt wird. Dabei dienen Strukturen, die über mehrere Schnitte die Probe durchspannen, und deshalb ähnlich in den verglichenen Bereichen erscheinen, als Orientierungspunkte, was die Registrierung der Bilddaten erleichtert. In biologischen Proben stellen Teile von subzellularen Strukturen und Kompartimenten oder Umrissen oder die zweidimensionalen Muster künstlicher in die ungeschnittene Probe eingebrachter Strukturen geeignete Orientierungspunkte dar. Auf diese Weise kann die Recheneinheit Verzerrungen in den Schnitten erkennen und korrigieren, so dass die Bildinhalte der jeweiligen Bildpaare im Ergebnis gut aufeinander passen.

In dem Schritt S9b rekonstruiert die Recheneinheit den Bildstapel aus Schritt S9a zu einem dreidimensionalen Bild-Datenvolumen. Dies erfolgt mittels herkömmlicher Algorithmen wie Kreuzkorrelation, Disparity Analysis oder Rendering-Algorithmen, insbesondere Volumen-Rendering oder Surface-Rendering.

In einem Schritt S9c ist vorgesehen, dass der Objektträger, auf dem die Schnitte immobilisiert vorliegen, mit einer Justiermarkierung versehen ist. Diese Justiermarkierung definiert ein für den Objektträger individuell gültiges Koordinatensystem. In Schritt S9c ermittelt die Recheneinheit die Lage der Justiermarkierung, sowie die Relativlage der Schnitte und der Auswahl- und Nachbarbereiche in Bezug auf die Justiermarkierung.

Da nun die Koordinaten der Schnitte und der Auswahl- und Nachbarbereiche in Bezug auf den Objektträger bekannt ist, ist es nun leicht möglich, den Objektträger einem weiteren Mikroskop, das eine abweichende Mikroskopiemodalität, beispielsweise eine teilchenoptische Abbildung, bedient, zuzuführen, um dort ebenso automatisiert die im Lichtmikroskop ausgewählten Bereiche abzubilden.

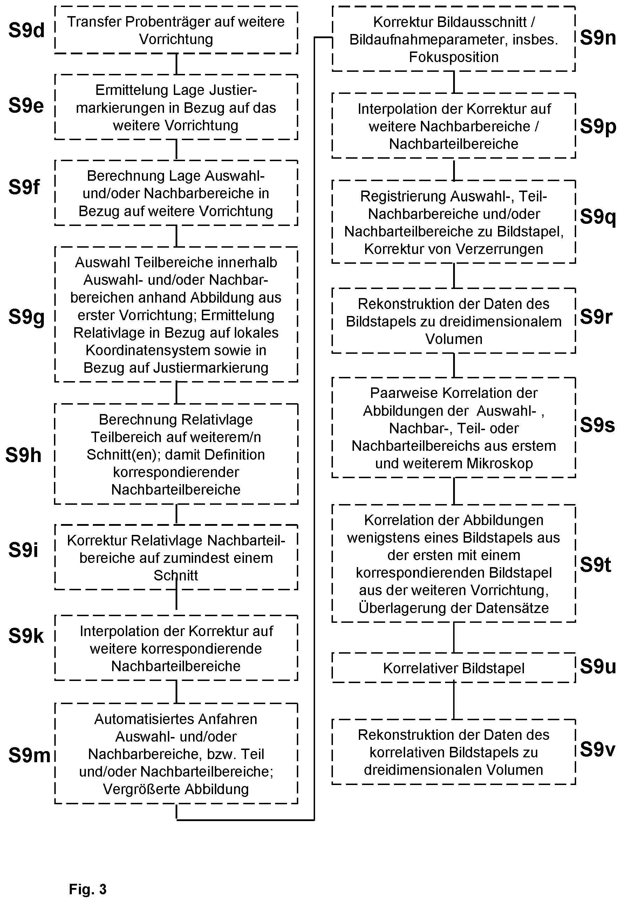

Der entsprechende, in Fig. 3 dargestellte Verfahrensablauf umfassend die Schritte S9d bis S9v ist als Fortführung des Verfahrens der Fig. 2 zu verstehen.

In einem Schritt S9d wird der Objektträger auf das weitere Mikroskop transferiert. Das weitere Mikroskop wird von der gleichen Recheneinheit gesteuert, die auch das Lichtmikroskop steuert.

In einem Schritt S9e wird die Lage der Justiermarkierung in Bezug auf das weitere Mikroskop ermittelt.

Da die Relativlagen der Schnitte und der Auswahl- und Nachbarbereiche in Bezug auf die Justiermarkierung bekannt sind, können nun in einem Schritt S9f die Koordinatendaten der Schnitte, des Auswahlbereichs und der Nachbarbereiche in Bezug auf das weitere Mikroskop berechnet werden. Mit den danach vorliegenden Koordinateninformationen kann die Recheneinheit das weitere Mikroskop so steuern, dass Schnitte, Auswahlbereich und Nachbarbereiche automatisiert anfahr- und abbildbar sind.

In einem weiteren Schritt S9g ist vorgesehen, das innerhalb der Auswahl- und Nachbarbereiche ein Teilbereich auswählbar ist. Dies erfolgt manuell durch den Nutzer, der den Teilbereich am Monitor der Recheneinheit festlegt. Die Recheneinheit ermittelt anschließend die Relativlage des Teilbereichs in Bezug auf das lokale Koordinatensystem des Schnittes sowie in Bezug auf die Justiermarkierung. Damit liegen der Recheneinheit alle notwendigen Lagedaten vor, um das weitere Mikroskop zu veranlassen, den Teilbereich automatisiert anzufahren.

In einem weiteren Schritt S9h überträgt die Recheneinheit die Lagedaten des Teilbereichs relativ zu seinem lokalen Koordinatensystem in die lokalen Koordinatensysteme der weiteren Schnitte analog zu dem Vorgehen in Schritt S7 übertragen, womit die Recheneinheit Nachbarteilbereiche in den weiteren Schnitten festlegt.

Inn den Schritten S9i und S9k kann die Lage der Nachbarteilbereiche korrigiert werden. Dies erfolgt in analog zu dem in den Schritten S7a und S7b vorgesehenen Korrekturregime, wobei in Schritt S9i die manuelle initiale Lagekorrektur eines Teil- bzw. Nachbarteilbereichs vorgesehen ist und in Schritt S9k die vorgenommene Korrektur auf die Nachbarteilbereiche interpoliert wird.

In einem Schritt S9m steuert die Recheneinheit das weitere Mikroskop, das in der Folge nach Maßgabe des Nutzers Auswahlbereich, Nachbarbereiche Teilbereich oder Nachbarteilbereiche automatisiert anfährt und vergrößert abbildet. Zweckmäßigerweise berücksichtigt die Recheneinheit nur die in Schritt S9a für die Registrierung ausgewählten Auswahl- bzw. Nachbarbereiche.

In den Schritten S9n und S9p erfolgt die Korrektur des Bildausschnittes oder anderer Bildaufnahmeparameter wie beispielsweise der Fokusposition. die in dem vorherigen Schritt S9m erstellten Abbildungen dienen als Testbilder. Die Korrektur erfolgt entweder schon dann, wenn nur ein Bereich in Schritt S9m abgebildet ist oder erst, nachdem bereits mehrere oder alle gewünschten Bereiche abgebildet sind. In schritt S9n wird die Korrektur an einem Bereich vorgenommen, in Schritt S9p wird die Korrektur auf die Nachbarbereich bzw. Nachbarteilbereiche mittels Interpolation automatisiert ebenfalls angewendet.

In einem Schritt S9q werden die mit dem weiteren Mikroskop erzeugten Abbildungen des Auswahlbereichs und der Nachbarbereiche bzw. des Teilbereichs und der Nachbarteilbereiche analog zu Schritt S9a paarweise zu einem Bildstapel registriert. Dabei erkennt die Recheneinheit Verzerrungen in den Schnitten und korrigiert diese, so dass die Bildinhalte der jeweiligen Bildpaare im Ergebnis gut aufeinander passen.

Nachfolgend rekonstruiert die Recheneinheit in einem Schritt S9r die Daten des Bildstapels aus Schritt S9q analog zu Schritt S9b zu einem dreidimensionalen Bild-Datenvolumen.

In den Schritten S9s bis S9v ist vorgesehen, die Abbildungen des Auswahlbereichs und der Nachbarbereiche aus dem Lichtmikroskop mit den entsprechenden Abbildungen aus dem weiteren Mikroskop zu korrelieren und zu einem dreidimensionalen Bild-Datenvolumen zu rekonstruieren.

Dazu korreliert die Recheneinheit entweder in einem Schritt S9s die Abbildungen des Auswahlbereichs und der Nachbarbereiche aus Schritt S9 paarweise mit den entsprechenden Abbildungen aus dem weiteren Mikroskop aus Schritt S9m. Alternativ ist es in einem Schritt S9t möglich, dass die Recheneinheit den Bildstapel aus Schritt S9a mit dem Bildstapel aus Schritt S9q korreliert. Im Ergebnis erstellt die Recheneinheit in Schritt S9u einen korrelativen Bildstapel., den die Recheneinheit schließlich in Schritt S9v zu einem korrelativen dreidimensionalen Bild-Datenvolumen rekonstruiert.

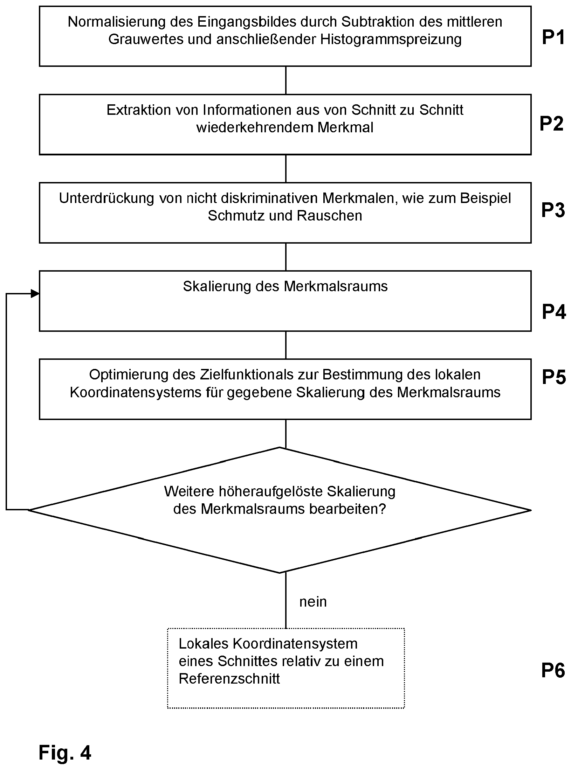

Fig. 4 zeigt ein geeignetes Verfahren zur Berechnung von lokalen Koordinatensystemen aus von Bildinhalten extrahierten Information durch die folgenden Schritte gekennzeichnet:

In einem Schritt P1 wird der abgebildete Schnitt durch Subtraktion des mittleren Grauwertes und anschließender Histogrammspreizung normalisiert.

In einem Schritt P2 erfolgt nach Auswahl eines von Schnitt zu Schnitt wiederkehrenden Merkmals die Extraktion von Informationen.

In einem Schritt P3 werden nicht diskriminative Informationen, wie zum Beispiel Schmutz und Rauschen unterdrückt.

In einem Schritt P4 wird der Merkmalsraum skaliert

In einem Schritt P5 wird ein der Bestimmung des lokalen Koordinatensystems dienendes Zielfunktional für die in Schritt P4 bestimmte Skalierung des Merkmalsraums optimiert.

Soweit nachfolgend eine höher aufgelöste Skalierung des Merkmalsraums bearbeitet werden soll, werden die Schritte P4 und P5 für die höher aufgelöste Skalierung wiederholt.

In einem Schritt P6 schließlich ergibt sich ein lokales Koordinatensystem eines weiteren abgebildeten Schnittes relativ zu dem (zuerst) abgebildeten Schnitt.

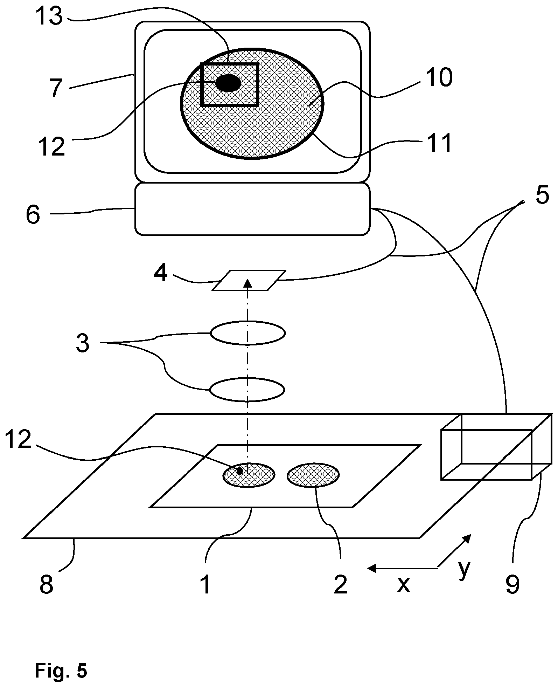

Fig. 5 zeigt eine Ausgestaltung der erfindungsgemäßen Vorrichtung. Die Vorrichtung ist eingerichtet, das in Fig. 1 geschilderte Verfahren durchzuführen. Auf einem Objektträger 1 immobilisierte Schnitte 2 einer biologischen Probe werden mittels eines Lichtmikroskops 3, das ein Auflicht- oder Durchlichtmikroskop mit Weitfeld beleuchtung oder scannender Beleuchtung sein kann, auf eine CCD oder CMOS-Kamera 4 abgebildet. Die Kamera 4 ist über ein Daten/Steuerungskabel 5 mit einer Recheneinheit 6, also beispielsweise einem Personal Computer (PC) verbunden. An den PC 6 ist ein Monitor 7 zur grafischen Ausgabe der von der Kamera 4 aufgenommenen Bildinhalte angeschlossen. Mit der Recheneinheit 6 weiter verbunden ist eine steuerbare Komponente, die von der Recheneinheit 6 gesteuert werden kann und Koordinateninformationen an die Recheneinheit sendet. In dem Ausführungsbeispiel der Fig. 1 ist die steuerbare Komponente ein Schrittmotor 9, der eine Aufnahmevorrichtung für den Probenträger 1 antreibt. Die Aufnahmevorrichtung für den Probenträger 1 ist in dem Ausführungsbeispiel der Fig. 1 als in x- und y-Richtung verfahrbarer Kreuztisch 8 ausgestaltet, mit welchem der Objektträger 1 lagefest, beispielsweise mittels einer Klemmverbindung (nicht gezeigt), verbunden ist.

Wenn die Kamera 4 einen Schnitt 2 abgebildet, sendet die Kamera anschließend die Bilddaten an die Recheneinheit, Über die steuerbare Komponente wird parallel die momentane Stellung des Kreuztisches an die Recheneinheit übergeben und die Recheneinheit verknüpft die Lage- mit den Bilddaten.

Die Recheneinheit ist eingerichtet, für einen zugespielten Bildinhalt, beispielsweise einen abgebildeten Schnitt 10, ein lokales Koordinatensystem zu berechnen, so dass die Lage vorbestimmter Bereiche, also Sub-Bildinhalte oder einzelner Bildpunkte innerhalb des zugespielten Bildinhalts eindeutig bestimmbar ist. Die Recheneinheit kann zu diesem Zweck automatisiert ein Merkmal, beispielsweise eine Umrissstruktur 11, auswählen, die der Berechnung des lokalen Koordinatensystems dienen sollen. Für diesen Zweck ist der Recheneinheit ein Canny-Kantenfilter implementiert, der Kanten aus dem vergrößerten Bild extrahieren kann. Um die Filterantwort in Bezug auf Schmutz und Rauschen zu optimieren, ist der Canny-Kantenfilter bereits auf typischerweise zu erwartende Kantenstrukturen des aufgenommenen Kontrastes voreingestellt. Um den Rechenaufwand zu minimieren, ist ebenso vorgesehen, dass der Nutzer der Recheneinheit ein Subareal des Bildinhaltes angibt, das ein zur Erstellung des lokalen Koordinatensystems geeignetes Merkmal aufweist. Die Recheneinheit extrahiert die Kanteninformationen dann nur aus diesem Subareal und wendet das aus diesen Kanteninformationen berechnete lokale Koordinatensystem auf den Gesamtbildinhalt an. Überdies ist die Recheneinheit auch eingerichtet, dem Nutzer am Monitorbild oder anhand eines Auswahlmenüs Merkmale auszugeben, aus denen der Nutzer anschließend manuell wählen kann.

Wählt der Nutzer nun einen Auswahlbereich 13 innerhalb des abgebildeten Schnittes 10 aus, indem er beispielsweise am Monitor einen Bildausschnitt um eine zu analysierende Zielstruktur 12 festlegt, kann die Recheneinheit 6 somit die Relativlage des Auswahlbereichs 13 in Bezug auf das lokale Koordinatensystem ermitteln.

Weiterhin kann die Recheneinheit 6 ebenfalls die Lage des Auswahlbereichs 13 in Bezug auf den Kreuztisch 8 ermitteln. Dies ist möglich, weil der Recheneinheit 6 die Koordinaten des abgebildeten Schnittes 2 in Bezug auf den Kreuztisch 8 vorliegen, welche die Lage des zentralen Bildpixels des abgebildeten Schnittes in Bezug auf den Kreuztisch 8 repräsentieren. Die laterale Lageverschiebung des Auswahlbereichs 13 von dem zentralen Bildpixel kann die Recheneinheit 6 in das Koordinatensystem des Kreuztisches 8 transformieren und in Steuerungssignale für den Schrittmotor 9 umsetzen.

Somit kann die Recheneinheit 6 den Schrittmotor 9 so ansteuern, dass dieser den Kreutztisch 8 so bewegt, dass der Auswahlbereich 13 angefahren wird. Unter "anfahren" ist vorliegend zu verstehen, dass ein vorbestimmter Bildinhalt lateral in die optische Achse des Mikroskopobjektivs bewegt wird.

Weiterhin ist die Recheneinheit 6auch eingerichtet, einen auf einem abgebildeten Schnitt 10 ausgewählten Auswahlbereich 13 in einen weiteren abgebildeten Schnitt zu übertragen. Dazu ist es lediglich notwendig, dass die Recheneinheit 6 für den weiteren abgebildeten Schnitt ebenfalls ein lokales Koordinatensystem berechnet hat, welches dem lokalen Koordinatensystem des abgebildeten Schnittes ähnelt. Idealerweise hat die Recheneinheit 6 bei der Berechnung der beiden lokalen Koordinatensysteme dasselbe Merkmal verwendet. Dies ist beispielsweise dann der Fall, wenn die Schnitte benachbart aus derselben Probe stammen und das zur Extraktion der Kanteninformation von der Recheneinheit 6 herangezogene Merkmal sich in der ungeschnittenen Probe über die beiden Schnitte erstreckt.

Auf dem weiteren abgebildeten Schnitt erzeugt die Recheneinheit 6 somit einen Nachbarbereich (nicht gezeigt), der zu dem Auswahlbereich 13 korrespondiert. Die Übertragung erfolgt mittels Koordinatentransformation, das heißt, die Koordinaten des Auswahlbereichs in Bezug auf dessen lokales Koordinatensystem werden in das lokale Koordinatensystem des weiteren Schnittes übertragen.

Die Recheneinheit 6 kann nun ebenfalls die Lage des Nachbarbereichs in Bezug auf den Kreuztisch 8 ermitteln und den Schrittmotor 9 nachfolgend so ansteuern, dass dieser den Kreutztisch 8 so bewegt, dass der dem Nachbarbereich entsprechende Bereich auf dem weiteren Schnitt angefahren wird.

Damit kann die Recheneinheit in einer automatischen Abfolge den Auswahlbereich und den Nachbarbereich jeweils anfahren und abbilden. Dies kann mit einem hoch auflösendem Mikroskopobjektiv geschehen.

Somit ist es mit der Vorrichtung des Ausführungsbeispiels nach Fig. 5 möglich, eine auf einem Schnitt 2 befindliche Zielstruktur 12 auszuwählen, indem auf dem abgebildeten Schnitt um die Zielstruktur 12 ein Auswahlbereich 13 festgelegt wird, und diese Zielstruktur in einem weiteren Schnitt abzubilden, ohne die Zielstruktur auf dem weiteren Schnitt manuell aufzusuchen.

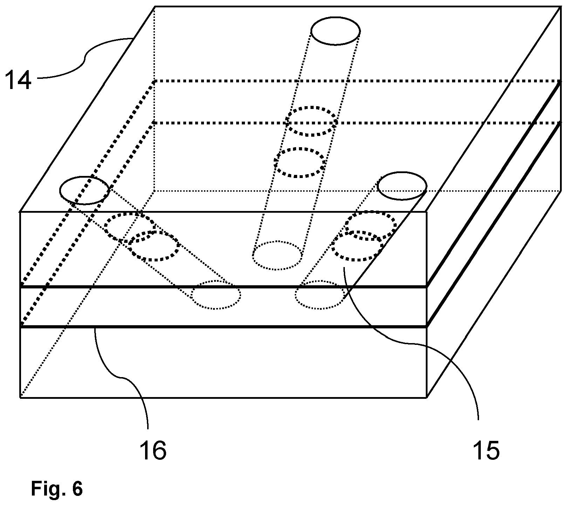

Fig 6 zeigt einen Probenblock 14, der mit drei aufeinander zulaufenden Laserbohrungen 15 versehen wurde, Die Bohrungen 15 wurden in zueinander vorbestimmten Winkeln jeweils schräg zur Schnittebene in die ungeschnittene Probe eingebracht. Somit definieren Bohrungen ein globales, für das Probenvolumen insgesamt oder überwiegend gültiges, dreidimensionales Koordinatensystem definieren. Die Bohrungen 15 bilden in jeder Schnittebene 16 der Probe 14 ein eindeutiges zweidimensionales Muster, das von Ebene zu Ebene seine Dimension verändert. Wird die Probe in eine Mehrzahl dünner Schnitte geschnitten, bleiben die Bohrungen auf den Schnitten sichtbar. Die Umrisse der Bohrungen können ideal als Merkmale verwendet werden, um auf den Schnitten lokale Koordinatensysteme zu berechnen, da sie einen hohen Kantenkontrast in den verschiedenen Mikroskopmodalitäten bereitstellen und somit robuste Informationen für Kantendetektoren liefern. Die von Schnitt zu Schnitt sich kontinuierlich verändernden zweidimensionale Muster der Bohrungen können darüber hinaus in einfacher Weise dazu dienen, die Abbilder der Schnitte einer Probe zu sortieren.

Die Sortierung der Abbildungen benachbarter Schnitte einer Probe kann unter Verwertung der aus den Bohrlochumrissen extrahierten Informationen beispielsweise über die Minimierung der Musterunterschiede erfolgen.

Zudem können Verzerrungen oder Verschiebungen innerhalb eines Schnittes ermittelt werden. Dies geschieht, indem die Abweichung des zweidimensionalen Musters auf einem abgebildeten Schnitt von seiner ursprünglichen vorbekannten Form, wie es bei Einbringung Bohrungen in die ungeschnittene Probe vorlag, berechnet wird und das für die Bohrungen ermittelte Maß der Verzerrung auf den abgebildeten Schnitt oder auf Bereiche des Schnittes extrapoliert wird.

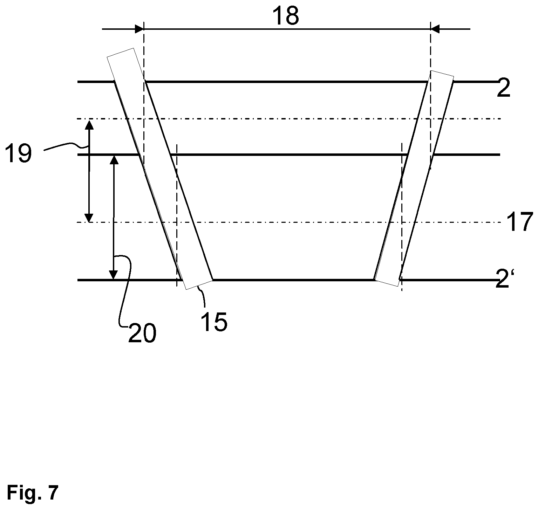

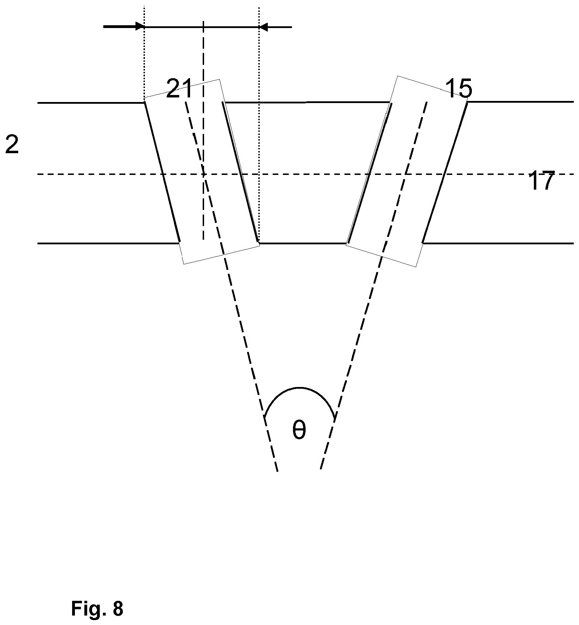

Darüber hinaus liefert das durch die Bohrungen 15 festgelegte globale dreidimensionale Koordinatensystem neben der Information über die Schnittebene eines Schnittes auch eine Information über den Abstand zweier Schnittebenen. In den Ausführungsbeispielen der Figuren 6 bis 8 werden Bohrungen 15 verwendet, die einen Durchmesser zwischen 0,2 µm und 5 µm aufweisen und die, wie in Fig 7 gut erkennbar, in einem Winkel θ von zueinander größer 20° in das Probenvolumen eingebracht sind. Die Dimensionsunterschiede der durch die Bohrungen repräsentierten zweidimensionalen Muster auf den Schnitten der Probe 14 können von einer Recheneinheit in einfacher Weise umgerechnet werden in den Abstand, den die Schnittebenen beider Schnitte zueinander aufweisen. Dieser Schnittebenenabstand 19 variiert, wie aus Fig. 6 ersichtlich, in Abhängigkeit der konkreten Schnittdicke 20. Bei der dreidimensionalen Rekonstruktion der abgebildeten Schnitte kann der Schnittebenenabstand 19 mit in die Berechnung einfließen und ermöglicht somit eine deutlich genauere Rekonstruktion als sie mit einem für alle Schnitte gleich angenommenen "fiktiven Schnittebenenabstand" möglich ist. Lokale Stauchungen oder Dehnungen des dreidimensionalen Rekonstrukts, die zwangsläufig entstehen, wenn ein "fiktiver Schnittebenenabstand" als Berechnungsgrundlage dient, werden so vermieden.

## Patentansprüche

1. Verfahren zur vergrößerten Abbildung von Proben, wobei
a. wenigstens zwei Schnitte (2) einer Probe, nämlich ein erster Schnitt und wenigstens ein weiterer Schnitt, die auf wenigstens einem Probenträger (1) vorliegen, mit einer Vorrichtung zur vergrößerten Abbildung von Proben vergrößert abgebildet werden, wobei der Probenträger (1) über eine Probenträgeraufnahme mit der Vorrichtung verbunden ist, und wobei die Lage der abgebildeten Probenträgerbereiche in Bezug auf die Vorrichtung sowie die verwendete Vergrößerungsstufe erfasst wird,
b. mittels wenigstens eines ausgewählten, in der Bildinformation der vergrößert abgebildeten Schnitte (10) enthaltenen Merkmals, für die wenigstens zwei vergrößert abgebildeten Schnitte (10) lokale, für den jeweiligen Schnitt spezifische Koordinatensysteme definiert werden,
c. wenigstens ein Bereich innerhalb wenigstens eines ersten der vergrößert abgebildeten Schnitte (10) ausgewählt wird (Auswahlbereich, 13), wobei der Auswahlbereich als ein Bildausschnitt festgelegt wird und die Relativlage dieses wenigstens einen Auswahlbereichs (13) bezogen auf das für den jeweiligen ersten Schnitt definierte lokale Koordinatensystem sowie dessen Lage in Bezug auf die Vorrichtung ermittelt werden und die Relativlage des lokalen Koordinatensystems und des Bezugssystems der Vorrichtung zueinander in Bezug gesetzt werden
d. die Relativlage dieses wenigstens einen Auswahlbereichs (13) in das lokale Koordinatensystem des wenigstens einen weiteren vergrößert abgebildeten Schnittes (10) übertragen wird, um wenigstens einen korrespondierenden Nachbarbereich auf dem weiteren Schnitt festzulegen,
e. die Lage des Nachbarbereichs in Bezug auf die Vorrichtung ermittelt wird und
f. der wenigstens eine vorher festgelegte Auswahlbereich (13) auf dem ersten Schnitt und/oder der wenigstens eine korrespondierende Nachbarbereich auf dem weiteren Schnitt von der Vorrichtung angefahren und vergrößert abgebildet wird/werden,
**dadurch gekennzeichnet, dass** künstlich in die ungeschnittene Probe (14) eingebrachte Strukturen (15) ausgewählt werden, um die lokalen Koordinatensysteme zu definieren.

2. Verfahren nach Anspruch 1, **dadurch gekennzeichnet, dass** wenigstens drei Schnitte (2) der Probe vergrößert abgebildet werden, wobei die vergrößert abgebildeten Schnitte (10) anhand der ausgewählten Merkmale und/oder anhand weiterer Merkmale sortiert werden, wobei die Sortierfolge die ursprünglichen Positionen der Schnitte in der Probe wiedergibt, und wobei die Sortierung über die Minimierung der Merkmalsunterschiede erfolgt.

3. Verfahren nach Anspruch 1 oder 2, **dadurch gekennzeichnet, dass** der wenigstens eine vergrößert abgebildete Auswahlbereich (13) mit seinem/n jeweiligen Nachbarbereich(en) wenigstens eine Bildserie bildet, die ganz oder teilweise zu einem dreidimensionalen Volumen zusammengesetzt wird.

4. Verfahren nach einem der vorhergehenden Ansprüche, **dadurch gekennzeichnet, dass** ein Probenträger (1) verwendet wird, auf dem wenigstens eine Justiermarkierung angebracht ist, dass ein globales, individuell für den Probenträger (1) gültiges Bezugssystem ermittelt wird, indem die Justiermarkierung vergrößert abgebildet und die Lage der Justiermarkierung in Bezug auf die Vorrichtung gespeichert wird, und dass die Relativlage von Auswahl- und/oder Nachbarbereich(en) bezogen auf die Justiermarkierung gespeichert werden.

5. Verfahren nach Anspruch 4, **dadurch gekennzeichnet, dass** bei der Abbildung der Schnitte, der Auswahlbereich(e) und/oder Nachbarbereich(e) erfasste Daten, vollständig oder teilweise an wenigstens eine weitere Vorrichtung zur vergrößerten Abbildung von Proben übermittelt werden, dass der wenigstens eine Probenträger (1) mit der wenigstens einen weiteren Vorrichtung zur vergrößerten Abbildung von Proben verbunden und wenigstens einer der zuvor abgebildeten Auswahl- und/oder Nachbarbereich(e) von der wenigstens einen weiteren Vorrichtung zur vergrößerten Betrachtung von Proben angefahren und vergrößert abgebildet wird.

6. Verfahren nach Anspruch 5, **dadurch gekennzeichnet, dass** der wenigstens eine mit der wenigstens einen weiteren Vorrichtung zur vergrößerten Abbildung von Proben vergrößert abgebildete Auswahlbereich (13) und/oder seine jeweiligen Nachbarbereich(e) wenigstens eine Bildserie bildet, die ganz oder teilweise zu einem dreidimensionalen Volumen zusammengesetzt wird.

7. Verfahren nach Anspruch 5 oder 6, **dadurch gekennzeichnet, dass** die in den unterschiedlichen Vorrichtungen zur vergrößerten Abbildung von Proben jeweilig vergrößert abgebildeten Auswahl- und/oder Nachbarbereiche(e) paarweise miteinander korreliert und rechnerisch korrelierte Bilddaten erzeugt werden.

8. Verfahren nach einem der Ansprüche 6 oder 7, **dadurch gekennzeichnet, dass** wenigstens ein Teilbereich innerhalb wenigstens eines zuvor mit der ersten oder mit der weiteren Vorrichtung zur vergrößerten Abbildung von Proben abgebildeten Auswahl- oder Nachbarbereichs ausgewählt wird, dass dessen Relativlage bezogen auf das jeweilig definierte lokale Koordinatensystem sowie in Bezug auf die Justiermarkierung ermittelt wird, dass die Relativlage in das lokale Koordinatensystem wenigstens eines weiteren vergrößert abgebildeten Schnittes übertragen wird, um wenigstens einen korrespondierenden Nachbarteilbereich auf diesem Schnitt festzulegen, dass die Lage des Nachbarteilbereichs in Bezug auf die Justiermarkierung ermittelt wird, dass der Teilbereich und der korrespondierende Nachbarteilbereich von der weiteren Vorrichtung angefahren und vergrößert abgebildet werden, und dass der Teilbereich mit seinem/n Nachbarteilbereich(en) wenigstens eine Bildserie bildet, die ganz oder teilweise zu einem dreidimensionalen Volumen zusammengesetzt wird.

9. Vorrichtung zur vergrößerten Abbildung von Proben, umfassend wenigstens eine Aufnahmeeinrichtung für einen Probenträger (1),
wenigstens eine steuerbare Komponente (8), die derart steuerbar ist, dass eine vorbestimmte Position auf dem Probenträger (1) gezielt in das Sehfeld der Vorrichtung gelenkt werden kann und eine Recheneinrichtung (6), die zur Steuerung der steuerbaren Komponente (8) eingerichtet ist, so dass mit der Vorrichtung das Verfahren nach einem der Ansprüche 1 bis 8 auszuführen ist, wobei die Recheneinrichtung (6) dazu eingerichtet ist, in den Abbildungen vorbestimmte Merkmale zu erkennen und anhand dieser Merkmale die individuell gültigen lokalen Koordinatensysteme zu definieren.

10. Vorrichtung nach Anspruch 9, wobei
die Recheneinrichtung (6) eingerichtet ist, um die wenigstens eine steuerbare Komponente (8) zu steuern, um Abbildungen oder Teile von Abbildungen dahingehend auszuwerten, um für diese Abbildungen individuell gültige Koordinatensysteme zu ermitteln, die Punkten oder Bereichen innerhalb der Gültigkeit eines solchen Koordinatensystems eine relative Lage zuordnen,
um die Relativlage von Punkten oder Bereichen innerhalb eines solchen Koordinatensystems zu ermitteln,
um die Relativlage von Punkten oder Bereichen auf einer Abbildung in ähnliche Abbildungen zu übertragen (übertragene Relativlage),
und um Relativlage und/oder übertragener Relativlage in Bezug zu weiteren Koordinatensystemen zu setzen, um Steuerbefehle für die wenigstens eine steuerbare Komponente abzuleiten.

11. Vorrichtung nach Anspruch 9 oder 10, **dadurch gekennzeichnet, dass** die Recheneinrichtung (6) eingerichtet ist, eine Serie ähnlicher Abbildungen zu sortieren, wobei ausgewählte Merkmale interpretiert werden und wobei die Sortierung über die Minimierung der Merkmalsunterschiede erfolgt.

12. Vorrichtung nach einem der Ansprüche 9 bis 11, **dadurch gekennzeichnet, dass** die Recheneinrichtung (6) eingerichtet ist, Serien von ähnlichen Abbildungen ganz oder teilweise zu registrieren und die registrierten Abbildungen zu einem dreidimensionalen Volumen zu rekonstruieren.

13. Vorrichtung nach einem der Ansprüche 9 bis 12 , **dadurch gekennzeichnet, dass** die Vorrichtung zur Abbildung eine lichtmikroskopisch abbildende Vorrichtung ist.

14. Vorrichtung einem der Ansprüche 9 bis 13, **dadurch gekennzeichnet, dass** die Vorrichtung zur Abbildung einen Strahl geladener Teilchen verwendet.

15. Vorrichtung nach Anspruch 14, **dadurch gekennzeichnet, dass** der Strahl geladener Teilchen ein Elektronen- oder Ionenstrahl ist.

16. Computerprogrammprodukt, umfassend eine Folge von darauf gespeicherten Steuerbefehlen, die bei Ausführung durch eine Recheneinrichtung (6) eine Vorrichtung zur vergrößerten Betrachtung von Proben zur Durchführung des Verfahrens nach einem der Ansprüche 1 bis 8 veranlasst oder sequentiell wenigstens zwei Vorrichtungen zur vergrößerten Betrachtung von Proben zur Durchführung des Verfahrens nach einem der Ansprüche 1 bis 8 veranlasst.

## Claims

1. Method for magnified imaging of samples, wherein
a. at least two slices (2) of a sample, specifically a first slice and at least one further slice, which are present on at least one sample carrier (1), are imaged in a magnified fashion using a device for magnified imaging of samples, wherein the sample carrier (1) is connected to the device by means of a sample-carrier receptacle, and wherein the position of the imaged sample-carrier regions in relation to the device and the utilized magnification level is captured,
b. local coordinate systems specific to the respective slice are defined by means of at least one selected feature contained in the image information of the slices (10) imaged in a magnified fashion, for the at least two slices (10) imaged in a magnified fashion,
c. at least one region (selection region, 13) is selected within at least one of the slices (10) imaged in a magnified fashion, wherein the selection region is defined as an image section, and the relative position of this at least one selection region (13) with respect to the local coordinate system defined for the respective first slice and the position thereof in relation to the device are established and the relative position of the local coordinate system and the reference system of the device are related to one another,
d. the relative position of this at least one selection region (13) is transferred into the local coordinate system of the at least one further slice (10) imaged in a magnified fashion in order to set at least one corresponding neighbouring region on the further slice,
e. the position of the neighbouring region in relation to the device is established, and
f. the at least one selection region (13) on the first slice set in advance and/or the at least one corresponding neighbouring region on the further slice are targeted by the device and is/are imaged in a magnified fashion,
**characterized in that** structures (15) artificially introduced into the uncut sample (14) are selected in order to define the local coordinate systems.

2. Method according to Claim 1, **characterized in that** at least three slices (2) of the sample are imaged in a magnified fashion, wherein the slices (10) imaged in a magnified fashion are sorted on the basis of the selected features and/or on the basis of further features, wherein the sort sequence reproduces the original positions of the slices in the sample, and wherein the sort is brought about by minimizing the differences in features.

3. Method according to Claim 1 or 2, **characterized in that** the at least one selection region (13) imaged in a magnified fashion forms at least one image series with its respective neighbouring region(s), which image series is wholly or partly assembled to form a three-dimensional volume.

4. Method according to any one of the preceding claims, **characterized in that** use is made of a sample carrier (1) to which at least one adjustment mark is attached, **in that** a global reference system valid individually for the sample carrier (1) is established by virtue of the adjustment mark being imaged in a magnified fashion and the position of the adjustment mark in relation to the device being stored, and **in that** the relative position of selection and/or neighbouring region(s) in respect of the adjustment mark are stored.

5. Method according to Claim 4, **characterized in that** data captured during the imaging of the slices, the selection region(s) and/or neighbouring region(s) are completely or partly transmitted to at least one further device for magnified imaging of samples, **in that** the at least one sample carrier (1) is connected to the at least one further device for magnified imaging of samples and at least one of the previously imaged selection and/or neighbouring region(s) are targeted and imaged in a magnified fashion by the at least one further device for magnified observation of samples.

6. Method according to Claim 5, **characterized in that** the at least one selection region (13) imaged in a magnified fashion by means of the at least one further device for magnified imaging of samples and/or the respective neighbouring region(s) thereof form(s) at least one image series, which is wholly or partly assembled to form a three-dimensional volume.

7. Method according to Claim 5 or 6, **characterized in that** the selection and/or neighbouring region(s) respectively imaged in a magnified fashion in the various devices for magnified imaging of samples are correlated to one another in pairs and image data correlated by computation are generated.

8. Method according to either of Claims 6 and 7, **characterized in that** at least one portion is selected within at least one selection or neighbouring region previously imaged by means of the first or the further device for magnified imaging of samples, **in that** the relative position of said portion is established in relation to the respectively defined local coordinate system and in relation to the adjustment mark, **in that** the relative position is transferred into the local coordinate system of at least one further slice imaged in a magnified fashion in order to set at least one corresponding neighbouring portion on this slice, **in that** the position of the neighbouring portion is established in relation to the adjustment mark, **in that** the portion and the corresponding neighbouring portion are targeted by the further device and imaged in a magnified fashion, and **in that** the portion with its neighbouring portion(s) forms at least one image series, which is wholly or partly assembled to form a three-dimensional volume.

9. Device for magnified imaging of samples, comprising at least one receptacle apparatus for a sample carrier (1),
at least one controllable component (8) which is controllable in such a way that a predetermined position on the sample carrier (1) can be directed into the field of view of the device in a targeted manner and a computer apparatus (6) which is configured to control the controllable component (8) such that the method according to any one of Claims 1 to 8 can be carried out by the device, wherein the computer apparatus (6) is configured to identify predetermined features in the images and define the individually valid local coordinate systems on the basis of these features.

10. Device according to Claim 9, wherein
the computer apparatus (6) is configured to control the at least one controllable component (8), to evaluate images or parts of images in respect of establishing individually valid coordinate systems for these images, which coordinate systems assign a relative position to points or regions within the validity of such a coordinate system,
to establish the relative position of points or regions within such a coordinate system,
to transfer the relative position of points or regions in an image to similar images (transferred relative position),
and to relate the relative position and/or transferred relative position to further coordinate systems in order to derive control commands for the at least one controllable component.

11. Device according to Claim 9 or 10, **characterized in that** the computer apparatus (6) is configured to sort a series of similar images, wherein selected features are interpreted and wherein the sort takes place by minimizing the differences in features.

12. Device according to any one of Claims 9 to 11, **characterized in that** the computer apparatus (6) is configured to register series of similar images wholly or partly and to reconstruct the registered images to form a three-dimensional volume.

13. Device according to any one of Claims 9 to 12, **characterized in that** the device used for imaging is a device imaging in light-microscopic fashion.

14. Device according to any one of Claims 9 to 13, **characterized in that** the device is used for imaging a beam of charged particles.

15. Device according to Claim 14, **characterized in that** the beam of charged particles is an electron beam or ion beam.

16. Computer program product, comprising a sequence of control commands stored thereon, which, when executed by a computer apparatus (6), cause a device for magnified imaging of samples to carry out the method according to any one of Claims 1 to 8 or sequentially cause at least two devices for magnified observation of samples to carry out the method according to any one of Claims 1 to 8.

## Revendications

1. Procédé de reproduction agrandie d'échantillons,
a. au moins deux coupes (2) d'un échantillon, à savoir une première coupe et au moins une autre coupe, qui sont présentes sur au moins un porte-échantillon (1), étant reproduites de manière agrandie à l'aide d'un dispositif de reproduction agrandie d'échantillons, le porte-échantillon (1) étant relié au dispositif par le biais d'un réceptacle porte-échantillon, et la position des zones de porte-échantillons reproduites par rapport au dispositif et le niveau de grossissement utilisé étant détectés,
b. au moyen d'au moins une caractéristique sélectionnée contenue dans l'information d'image des coupes agrandies (10), des systèmes de coordonnées locaux spécifiques à la coupe respective étant définis pour les au moins deux coupes agrandies (10),
c. au moins une zone étant sélectionnée dans au moins une première des coupes agrandies (10) (zone de sélection, 13), la zone de sélection étant définie comme coupe d'image et la position relative de cette au moins une zone de sélection (13) par rapport au système de coordonnées local défini pour la première coupe respective et sa position par rapport au dispositif étant déterminées et la position relative du système de coordonnées local et celle du système de référence du dispositif étant mises en rapport l'une avec l'autre,
d. la position relative de cette au moins une zone de sélection (13) étant transférée dans le système de coordonnées local de l'au moins une autre coupe agrandie (10) afin de définir au moins une zone voisine correspondante sur l'autre coupe,
e. la position de la zone voisine par rapport au dispositif étant déterminée et
f. l'au moins une zone de sélection (13) définie précédemment sur la première coupe et/ou l'au moins une zone voisine correspondante sur l'autre coupe étant approchées par le dispositif et reproduites de manière agrandie,
**caractérisé en ce que** des structures (15) introduites artificiellement dans l'échantillon non coupé (14) sont sélectionnées afin de définir les systèmes de coordonnées locaux.

2. Procédé selon la revendication 1, **caractérisé en ce qu'**au moins trois coupes (2) de l'échantillon sont représentées de manière agrandie, les coupes agrandies (10) étant triées sur la base des caractéristiques sélectionnées et/ou sur la base d'autres caractéristiques, l'ordre de tri reproduisant les positions d'origine des coupes dans l'échantillon, et le tri étant effectué avec minimisation des différences de caractéristiques.

3. Procédé selon la revendication 1 ou 2, **caractérisé en ce que** l'au moins une zone de sélection agrandie (13) forme avec sa ou ses zones voisines respectives au moins une série d'images qui est totalement ou partiellement combinée pour former un volume tridimensionnel.

4. Procédé selon l'une des revendications précédentes, **caractérisé en ce qu'**un porte-échantillon (1) est utilisé sur lequel au moins une marque d'ajustement est fixée, **en ce qu'**un système de référence global, valable individuellement pour le porte-échantillon (1), est déterminé du fait que la marque de réglage est représentée de manière agrandie et que la position de la marque d'ajustement par rapport au dispositif est mémorisée, et **en ce que** la position relative de la zone ou des zones de sélection et/ou de la zone voisine ou des zones voisines par rapport à la marque d'ajustement est mémorisée.

5. Procédé selon la revendication 4, **caractérisé en ce que** des données acquises lors de la reproduction des coupes, de la zone ou des zones de sélection et/ou de la zone voisine ou des zones voisines, sont totalement ou partiellement transmises à au moins un autre dispositif de reproduction agrandie d'échantillons, **en ce que** l'au moins un porte-échantillon (1) est relié à l'au moins un autre dispositif de reproduction agrandie d'échantillons et au moins une des zones de sélection et/ou des zones voisines précédemment reproduites sont approchées et reproduites de manière agrandie par l'au moins un autre dispositif de visualisation agrandie d'échantillons.

6. Procédé selon la revendication 5, **caractérisé en ce que** l'au moins une zone de sélection (13) et/ou sa zone voisine respective ou ses zones voisines respectives, qui sont reproduites de manière agrandie avec l'au moins un autre dispositif de reproduction agrandie d'échantillons, forment au moins une série d'images qui sont totalement ou partiellement combinées pour former un volume tridimensionnel.

7. Procédé selon la revendication 5 ou 6, **caractérisé en ce que** la zone de sélection ou les zones de sélection et/ou la zone voisine agrandie ou les zones voisines agrandies, reproduites de manière agrandie respectivement dans les différents dispositifs de reproduction agrandie d'échantillons, sont corrélées entre elles par paires et des données d'image corrélées par calcul sont générées.

8. Procédé selon l'une des revendications 6 et 7, **caractérisé en ce qu'**au moins une sous-zone est sélectionnée à l'intérieur d'au moins une zone de sélection ou zone voisine préalablement reproduite avec le premier ou l'autre dispositif de reproduction agrandie d'échantillons, **en ce que** sa position relative est déterminée par rapport au système de coordonnées local défini à chaque fois et par référence à la marque d'ajustement, **en ce que** la position relative est transférée au système de coordonnées local d'au moins une autre coupe reproduite de manière agrandie afin de définir au moins une sous-zone voisine correspondante sur cette coupe, **en ce que** la position de la sous-zone voisine est déterminée par référence à la marque d'ajustement, **en ce que** la sous-zone et la sous-zone voisine correspondante sont approchées et reproduites de manière agrandie par l'autre dispositif, et **en ce que** la sous-zone forme avec sa sous-zone voisine ou ses sous-zones voisines au moins une série d'images qui est complètement ou partiellement combinée pour former un volume tridimensionnel.

9. Dispositif de reproduction agrandie d'échantillons, lequel comprend au moins un dispositif de réception d'un porte-échantillon (1), au moins un composant commandable (8) qui peut être commandé de telle sorte qu'une position prédéterminée sur le porte-échantillon (1) est spécifiquement dirigée dans le champ de vision du dispositif et un dispositif de calcul (6) qui est adapté pour commander le composant commandable (8) de sorte que le procédé selon l'une des revendications 1 à 8 puisse être mis en œuvre avec le dispositif, le dispositif de calcul (6) étant adapté pour détecter des caractéristiques prédéterminées dans les reproductions et pour définir les systèmes de coordonnées locaux valides individuellement sur la base de ces caractéristiques.

10. Dispositif selon la revendication 9,
le dispositif de calcul (6) étant adapté pour commander l'au moins un composant commandable (8) afin d'évaluer des reproductions ou des parties de reproduction afin de déterminer individuellement des systèmes de coordonnées valides pour ces reproductions, qui associent une position relative à des points ou zones à l'intérieur de la validité d'un tel système de coordonnées afin de déterminer la position relative de points ou de zones dans un tel système de coordonnées, pour transférer la position relative de points ou de zones à une reproduction en reproductions similaires (position relative transférée),
et pour définir la position relative et/ou la position relative transférée par référence à d'autres systèmes de coordonnées afin de déduire des instructions de commande pour l'au moins un composant commandable.

11. Dispositif selon la revendication 9 ou 10, **caractérisé en ce que** le dispositif de calcul (6) est adapté pour trier une série de reproductions similaires, les caractéristiques sélectionnées étant interprétées et le tri étant effectué par minimisation des différences de caractéristiques.

12. Dispositif selon l'une des revendications 9 à 11, **caractérisé en ce que** le dispositif de calcul (6) est adapté pour enregistrer totalement ou partiellement des séries de reproductions similaires et pour reconstruire les reproductions enregistrées afin de former un volume tridimensionnel.

13. Dispositif selon l'une des revendications 9 à 12, **caractérisé en ce que** le dispositif de reproduction est un dispositif de reproduction par microscopie optique.

14. Dispositif selon l'une des revendications 9 à 13, **caractérisé en ce que** le dispositif de reproduction utilise un faisceau de particules chargées.

15. Dispositif selon la revendication 14, **caractérisé en ce que** le faisceau de particules chargées est un faisceau d'électrons ou d'ions.

16. Progiciel comprenant une séquence d'instructions de commande mémorisées dans celui-ci, laquelle séquence ordonne, lorsqu'elle est exécutée par un dispositif de calcul (6), à un dispositif de visualisation agrandie d'échantillons de mettre en œuvre le procédé selon l'une des revendications 1 à 8 ou séquentiellement à au moins deux dispositifs de visualisation agrandie d'échantillons de mettre en œuvre le procédé selon l'une des revendications 1 à 8.
